(19) Europäisches Patentamt
European Patent Office
Office européen des brevets

(11) **EP 4 354 082 A2**

(12) **EUROPÄISCHE PATENTANMELDUNG**

(43) Veröffentlichungstag:
**17.04.2024 Patentblatt 2024/16**

(21) Anmeldenummer: 24153189.6

(22) Anmeldetag: **17.11.2020**

(51) Internationale Patentklassifikation (IPC):
*G01B 21/32* *(2006.01)*

(52) Gemeinsame Patentklassifikation (CPC):
**G01B 5/30; G01B 7/16; G01B 21/32**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.11.2019 DE 102019131094**

(62) Dokumentnummer(n) der früheren Anmeldung(en) nach Art. 76 EPÜ:
**20208176.6 / 3 822 577**

(71) Anmelder: **Schmitt, Philip**
**44801 Bochum (DE)**

(72) Erfinder: **Schmitt, Philip**
**44801 Bochum (DE)**

(74) Vertreter: **Michalski Hüttermann & Partner**
**Patentanwälte mbB**
**Kaistraße 16A**
**40221 Düsseldorf (DE)**

Bemerkungen:
Diese Anmeldung ist am 22-01-2024 als Teilanmeldung zu der unter INID-Code 62 erwähnten Anmeldung eingereicht worden.

(54) **MIKROMECHANISCHE VORRICHTUNG ZUR ENERGIEAUTARKEN MESSUNG UND SPEICHERUNG EINES MECHANISCHEN VERSCHIEBUNGSSIGNALS**

(57) Die vorliegende Erfindung betrifft eine Vorrichtung und ein Verfahren zur ortsaufgelösten Dehnungsmessung an bestimmten Stellen eines mechanisch beanspruchten Bauelements. Die vorliegende Erfindung betrifft eine Vorrichtung zur mechanischen Dehnungsmessung über zwei Verbindungselemente, deren Verschiebung über einen mechanischen Verstärker verstärkt und über einen elektromechanischen Wandler in eine elektrische Größe gewandelt wird. Die Erfindung betrifft außerdem eine mechanische Maximalwertspeicherung sowie die damit verbundene Möglichkeit einer energieautarken Dehnungsmessung und -überwachung. Die Erfindung betrifft weiterhin ein Verfahren zur Bestimmung der Dehnung eines Messobjekts mit Hilfe des erfindungsgemäßen mikromechanischen Messsystems

Fig. 1

EP 4 354 082 A2

**Beschreibung**

**Technischer Bereich der Erfindung**

Die vorliegende Erfindung betrifft eine Vorrichtung und ein Verfahren zur ortsaufgelösten Dehnungsmessung an bestimmten Stellen eines mechanisch beanspruchten Bauelements. Die Erfindung betrifft insbesondere eine Vorrichtung zur mechanischen Dehnungsmessung über zwei Verbindungselemente, deren Verschiebung über einen mechanischen Verstärker verstärkt und über einen elektromechanischen Wandler in eine elektrische Größe gewandelt wird. Die Erfindung betrifft außerdem eine mechanische Maximalwertspeicherung sowie die damit verbundene Möglichkeit einer energieautarken Dehnungsüberwachung.

**Hintergrund und Stand der Technik**

Zur Überwachung stark beanspruchter Bauelemente werden häufig Dehnungsmessstreifen (DMS) eingesetzt. Über DMS lassen sich Dehnungen und Spannungen an bestimmten Stellen eines mechanisch beanspruchten Bauelements lokal aufgelöst bestimmen. DMS sind dehnungssensitive elektrische Widerstände, deren Widerstandswert mit zunehmender Dehnung steigt bzw. bei zunehmender Stauchung sinkt. Über die Messung des Widerstandes lässt sich so die aktuell vorliegende Dehnung äußerst genau bestimmen.

Im Stand der Technik werden Dehnungsmessungen an makroskopischen Bauelementen mit Hilfe von resistiven Dehnungsmessstreifen (DMS) und piezoresistiven Dehnungsmesssystemen durchgeführt.

Bei DMS handelt es sich um meist selbstklebende Streifen mit Halbleiter- oder Metallleiterbahnen, die einen elektrischen Widerstand bilden. Wird der DMS gedehnt oder gestaucht, so verändert sich aufgrund der geometrischen Verformung und der Änderung des spezifischen Widerstandes der Gesamtwiderstand des DMS. Es ergibt sich eine Widerstandsänderung $\Delta R/R$, die sowohl von der Dehnung $\varepsilon$ als auch vom materialspezifischen k-Faktor abhängig ist:

$$\frac{\Delta R}{R} = k \, \varepsilon$$

(Schomburg, 2011)

Für Metalle liegt der k-Faktor in der Größenordnung 1,5 bis 3. Halbleiter erreichen Werte zwischen 20 bis 100 (Schomburg, 2011; Gerlach und Dötzel, 2006). Die Sensitivität der Widerstandsänderung gegenüber der Dehnung ist folglich auch bei sehr hohen Dehnungen von 1% sehr klein.

Da die Widerstandsänderung viel sensitiver auf Temperaturänderungen als auf Dehnungsänderungen reagiert, werden DMS stets in einer "Wheatstone-Messbrücke" verschaltet, um den Temperatureinfluss zu kompensieren. Wird als Messbrücke eine Viertel- oder Halbbrücke eingesetzt, so wird die Dehnungssensitivität jedoch zusätzlich auf ein Viertel bzw. auf die Hälfte reduziert. Zum Auswerten der Widerstandsänderungen bzw. der Brückenspannung ist zudem eine aufwendige analoge Schaltung notwendig. Meist werden Instrumentenverstärker genutzt, um das schwache analoge elektrische Messsignal zu verstärken (Tietze *et al.* 2012). Außerdem muss fast immer eine Offset-Korrektur der Brückenspannung durchgeführt werden, da die Widerstandswerte der Referenzwiderstände in der Messbrücke fertigungsbedingt nicht identisch sind und sich so in der Regel eine Offset-Spannung an der Messbrücke einstellt.

Nähere Einzelheiten zu Dehnungsmessstreifen finden sich im VDI/VDE 2635 Blatt 1 und Blatt 2.

Eine weitere Möglichkeit der Dehnungsmessung besteht in der Anbringung von Faser-Bragg-Gittern am zu dehnenden Bauelement. Hierzu wird ein Lichtstrahl in einen Lichtwellenleiter mit Faser-Bragg-Gitter eingeleitet und am anderen Ende des Leiters spektral analysiert. Über die spektrale Verschiebung der reflektierten Wellenlänge lässt sich Aufschluss über die Längenänderung des Leiters gewinnen (Chen *et al*.; DE 10214984 B4; EP 2294374 B1; DE 102014004544 T5).

Das Funktionsprinzip von Faser-Bragg-Gittern (engl. "fiber Bragg grating", FBG) beruht auf dem Prinzip der Fresnel Reflektion. Hierzu werden in einem Lichtwellenleiter Bereiche mit unterschiedlichen Brechungsindizes erzeugt, die sich vom Brechungsindex der eigentlichen Faser unterscheiden. Diese Bereiche werden i.d.R. in einem periodischen Abstand mit der optischen Länge $d = \lambda/2$ angeordnet, wobei sich die einzelnen Bereiche aus je zwei $\lambda/4$- breiten Einzelschichten mit unterschiedlichem Brechungsindex zusammensetzen. Licht, das durch den Lichtwellenleiter geführt wird, wird abhängig von der Wellenlänge an den optischen Grenzflächen der modifizierten Bereiche reflektiert. Die Reflektion bestimmter Wellenlängen ergibt sich aus der Phasenverschiebung der reflektierten Lichtwelle um 180° bzw. 0° beim Auftreffen auf eine optische Grenzfläche. Durch die Phasenverschiebung und den $\lambda/4$ breiten optischen Schichten kommt es bei der reflektieren Welle mit der Wellenlänge $\lambda$ zu konstruktiver Interferenz. Die Phasenverschiebung hängt dabei davon ab, ob das Licht zunächst aus einem Bereich mit hohem Brechungsindex kommt und auf einen Bereich mit niedrigem Brechungsindex (0°) stößt oder ob es umgekehrt von einem Bereich mit niedrigem Brechungsindex auf einen Bereich mit hohem Brechungsindex (180°) stößt.

Durch eine Dehnung der Faser werden auch die einzelnen Bereiche der Bragg-Schichten gedehnt, wobei sich die optische Länge ändert. Folglich verändert sich auch die Wellenlänge, für die die Bragg-Bedingung erfüllt wird und die entsprechend reflektiert wird. Über eine Analyse der Verschiebung des Reflexions-/Transmissionsspektrums lässt sich so auf die Dehnung der Faser schließen.

Der besondere Vorteil von FBG-Dehnungssensoren gegenüber DMS besteht in der Unempfindlichkeit gegenüber elektromagnetischen Feldern, die beim DMS eine zusätzliche Störspannung induzieren könnten. Der Nachteil dieser Lösung besteht in der teuren und aufwendigen Analyse des Spektrums. Zudem muss eine Lichtquelle zur Verfügung stehen.

Bei standardisierten Werkstoffprüfversuchen werden zur Bestimmung der Dehnung an Zugproben häufig Extensometer genutzt. Eine Dehnungsmessung erfolgt hier meist optisch und berührungslos und ohne Aufkleben von DMS oder FBG. Zur Bestimmung der Dehnung werden auf der Zugprobe Markierungen vorgesehen, die optisch z.B. über Videoanalyse erfasst werden. Die Verschiebung der Markierungen erlaubt es, Aufschluss über die Dehnung des Prüflings zu erhalten. Alternativ können auch interferometrische Prinzipien zur Dehnungsmessung genutzt werden. Eine Übersicht über die verschiedenen Verfahren bieten Tian *et al.* (2012) sowie DE 102010038062 B9, DE 102015002452 T5.

Weitere Sensoren zur Dehnungsbestimmung werden in DE 69822097T2 und DE 102016202769 A1 beschrieben.

Bei der Sensoreinheit in DE 69822097T2 handelt es sich um eine Vorrichtung zur Vermessung einer Verschiebung oder Dehnung durch zwei zueinander verschiebbare "Elektrodenarrays". Die Elektrodenarrays tragen eine entsprechende Nonius-Struktur zur hochauflösenden Messung der Verschiebung. Es liegen je nach Verschiebung andere Elektroden übereinander. Die Elektroden an sich berühren sich nicht. Es wird nur eine Ladungsänderung der sich veränderten Kapazitäten der einzelnen Elektroden registriert. Die Veränderung der Ladungen wird mit Hilfe einer elektronischen Auswerteeinheit in ein digitales Signal gewandelt.

Die Nachteile dieser Sensoreinheit bestehen in einem hohen Schaltungsaufwand bei der Digitalisierung der Signale und in der beschränkten Präzision durch Elektrodengröße und Nonius-Struktur. Außerdem ist keine Speicherung des erreichten Maximalwerts und keine energieautarke Überwachung möglich.

Die DE 102016202769 A1 offenbart einen Sensor zur integralen oder ortsaufgelösten Messung von Dehnungen basierend auf vorgeschädigten Kohlefasern. Die Kohlefasern sind in einer ausgehärteten Matrix eingebettet und werden von zwei Seiten elektrisch kontaktiert. Durch die Dehnung der Kohlefasern verändert sich der elektrische Widerstand. Wird die Bruchspannung einzelner Kohlefasern bei der Dehnung erreicht, so steigt der Widerstand erheblich an. Der erreichte Maximalwert der Dehnung lässt sich so passiv speichern. Jedoch gibt es keine Möglichkeit, den gespeicherten Maximalwert wieder zurückzusetzen.

Eine passive Vorrichtung zum Zählen von Dehnungsüberschreitungen wird in der EP 2 705 330 B1 offenbart. Hierbei handelt es sich um eine dreidimensionale Messvorrichtung zur Befestigung an einem Prüfobjekt über zwei Fixierungspunkte. Durch Überschreiten eines festgelegten Dehngrenzwertes wird die Anzahl der Dehnzyklen über einen zahnradbasierten Mechanismus gezählt. Es erfolgt jedoch keine Erfassung der maximal erreichten Dehnung. Ein Zahnrad basierter Mechanismus ist zudem stets mit Spiel behaftet, wodurch eine kontinuierliche Dehnungsmessung verfälscht wird.

## Zusammenfassung der Erfindung

Die Überwachung kritischer Bauelemente mittels DMS erlaubt ein kontinuierliches Monitoring der auftretenden Beanspruchungen. Häufig sind insbesondere für Wartungszwecke allerdings nur die maximal erreichten Dehnungsspitzen von Interesse, sodass die kontinuierlich erfassten Daten meist gar nicht benötigt und damit verworfen werden. Zudem ist eine Bauteilüberwachung mittels DMS äußerst aufwendig, da die DMS zur Temperaturkompensation in einer Messbrücke verschaltet werden und die Signale an den Messbrücken aufbereitet werden müssen. So ist neben der elektrischen Verstärkung der Brückenspannung und der Offset-Korrektur auch noch die Digitalisierung und häufig auch die Speicherung der Messergebnisse erforderlich. Ferner ist für die Messung eine Spannungsversorgung notwendig, die eine Verkabelung der DMS und der Auswerteelektronik mit sich bringt.

Eine Aufgabe der vorliegenden Erfindung bestand deshalb darin, als Alternative zu klassischen widerstandsbasierten DMS ein neuartiges mikromechanisches System bereitzustellen, das vollkommen energieautark eine kontinuierliche mechanische Bauteilüberwachung zulässt.

Eine weitere Aufgabe der vorliegenden Erfindung bestand darin, mit einem solchen mikromechanischen System eine mechanische Maximalwertspeicherung zu gewährleisten und dadurch eine energieautarke Dehnungsüberwachung zu ermöglichen.

Ähnlich wie DMS, können die hier vorgestellten Mikrosysteme in Form eines Chips zur lokalen Dehnungsüberwachung auf einer Probe befestigt werden, um so die aktuell vorliegende Dehnung oder auch die maximal auftretende Dehnung zu messen und zu speichern. Eine Widerstandsbrücke mit entsprechender Verstärkerschaltung mit Offsetkorrektur sowie ein elektronischer A/D-Wandler ist bei diesem Prinzip nicht erforderlich. Die Messung der Dehnung erfolgt rein mechanisch, sodass elektrische parasitäre Effekte wie thermisches Rauschen im Gegensatz zum resistiven DMS nur eine geringfügige Rolle spielen.

Das erfindungsgemäße mikromechanische System hat den Vorteil gegenüber bestehenden Dehnungsmesssystemen, dass keine kontinuierliche Spannungsversorgung für die Dauerüberwachung mittels Maximalwertspeicher notwendig ist und das System vollkommen energieautark eingesetzt werden kann. Es ist keine aufwendige elektrische Verstärkerschaltung und keine Verschaltung in einer Messbrücke notwendig, somit auch kein Abgleichen von Widerständen. Im System erfolgt eine direkte Diskretisierung und Digitalisierung der Messwerte in der mechanischen Domäne. Da es sich bei der Dehnungserfassung um ein rein mechanisches Prinzip handelt, gibt es keine parasitären elektrischen Effekte (wie z.B. thermisches Rauschen).

Das erfindungsgemäße System ist außerdem günstig in der Herstellung, da diese vorzugsweise auf einer standardisierten SOI-Technologie (mit vielen Chips pro Wafer) beruht. Da im Wesentlichen nur Silicium und Metalle, Gläser oder Keramiken bei der Herstellung verwendet werden, ist das System temperaturstabil und umweltschonend. Für die mechanische Verbindung des Systems mit einem Prüfobjekt bestehen viele verschiedene Möglichkeiten; z.B. durch Löten, Schweißen, Verkleben, Bonden.

Die beschriebenen technischen Aufgaben werden durch die Vorrichtungen bzw. Verfahren gemäß den unabhängigen Ansprüchen der aktuellen Erfindung gelöst. Die abhängigen Ansprüche beschreiben bevorzugte Ausführungsformen. Wertebereiche, die durch numerische Werte begrenzt sind, sollen stets die besagten Grenzwerte beinhalten.

## Beschreibung der Zeichnungen

**Fig. 1:** Komponenten des mikromechanischen Dehnungsmesssystems und Anbindung an ein Messobjekt

**Fig. 2:** Anbindung des mikromechanischen Dehnungsmesssystems an einem Messobjekt bzw. an einer Zugprobe

**Fig. 3:** Darstellung der direkten Verbindung des mikromechanischen Dehnungsmesssystems mit einem Messobjekt

**Fig. 4:** Darstellung der indirekten Verbindung des Dehnungssensors mit einem Messobjekt über ein flexibles Gehäuse

**Fig. 5:** Technisches Prinzip des mikromechanischen Dehnungsmesssystems

**Fig. 6:** Technisches Prinzip des mikromechanischen Dehnungsmesssystems mit Maximalwertspeicher

**Fig. 7:** Technisches Prinzip eines Kompensationsmechanismus zur Trennung sich überlagernder isotroper und axialer Dehnungen an einem Messobjekt: A) Darstellung des Wirkprinzips des Kompensationsmechanismus (14) bei einer isotrop wirkenden Ausdehnung des Messobjektes (12). B) Darstellung des Wirkprinzips des Kompensationsmechanismus bei uniaxialer Dehnung des Messobjektes.

**Fig. 8:** Technisches Prinzip des mikromechanischen Dehnungsmesssystems mit Kompensationsmechanismus

**Fig. 9:** Technisches Prinzip eines einstufigen mechanischen Verstärkers bestehend aus mehreren seriell verbundenen Hebeln mit den Segmentlängen a, b, c, d

**Fig. 10:** Technisches Prinzip eines mehrstufigen mechanischen Verstärkers mit der Eingangsverschiebung $y_{in}$ und der ausgangsseitigen Verschiebung $y_{out}$

**Fig. 11:** Technisches Prinzip eines einstufigen mechanischen Verstärkers mit implementierter Übertragungsfunktion

**Fig. 12:** Darstellung des ausgelenkten mechanischen Verstärkers mit implementierter Übertragungsfunktion

**Fig. 13:** Ausführungsbeispiel eines Dehnungssensors mit einem kapazitiven elektromechanischen Wandler

**Fig. 14:** Ausführungsbeispiel eines Aufbaus für einen kontaktbasierten elektromechanischen Wandler mit binärer Codierung

**Fig. 15:** Darstellung eines kontaktbasierten elektromechanischen Wandlers im ausgelenkten Zustand, wobei ein binäres Signal 1-0 (dezimal 2) generiert wird.

**Fig. 16:** Ausführungsbeispiel für die Anordnung der Gegenelektroden bei einem kontaktbasierten elektromechanischen Wandler mit a) überlappenden Gegen- und Fingerelektroden und b) Gegenelektroden, die einen geringen Abstand zu den Fingerelektroden aufweisen, jedoch über eine elektrostatische Kraft an die Fingerelektrode hin angezogen werden und diese kontaktieren.

**Fig. 17:** Ausführungsbeispiel eines bi-direktionalen elektromechanischen Wandlers in paralleler Kammanordnung mit implementiertem Gray-Code und zusätzlichem Vorzeichenzweig sowie Darstellung der parallel codierten Ausgangssignale in einer Wertetabelle.

**Fig. 18:** Ausführungsbeispiel eines kontaktbasierten elektromechanischen Wandlers mit Dezimaler Codierung.

**Fig. 19:** Ausführungsbeispiel für einen kontaktbasierten elektromechanischen Wandler mit Unär-Codierung.

**Fig. 20:** Ausführungsbeispiel eines mikromechanischen Dehnungsmesssystems, wobei der elektromechanische Wandler als kontaktbasierter Wandler mit Unär-Codierung ausgeführt ist.

**Fig. 21:** Ausführungsbeispiel eines mikromechanischen Dehnungsmesssystems, wobei der elektromechanische Wandler in einer parallelen Kammstruktur als bi-direktionaler kontaktbasierter Wandler mit Gray-Codierung ausgeführt ist.

**Fig. 22:** Ausführungsbeispiel eines elektromechanischen Wandlers in einer parallelen Kammstruktur als bi-direktionaler kontaktbasierter Wandler mit Gray-Codierung und implementierter Übertragungsfunktion sowie mit bi-direktionalem mechanischen Maximalwertspeicher.

**Fig. 23:** Technisches Prinzip eines mechanischen Maximalwertspeichers

**Fig. 24:** Technisches Prinzip eines kaskadierten mechanischen Maximalwertspeichers mit Zwischenpositionen

**Fig. 25:** Schaltabfolge eines kaskadierten mechanischen Maximalwertspeichers

**Fig. 26:** Kaskadierter Maximalwertspeicher mit elektrostatischem Rückstellmechanismus. A) Möglicher Aufbau des Rückstellmechanismus. B) Lösevorgang der Sperrklingen beim Zurücksetzen des Maximalwertspeichers

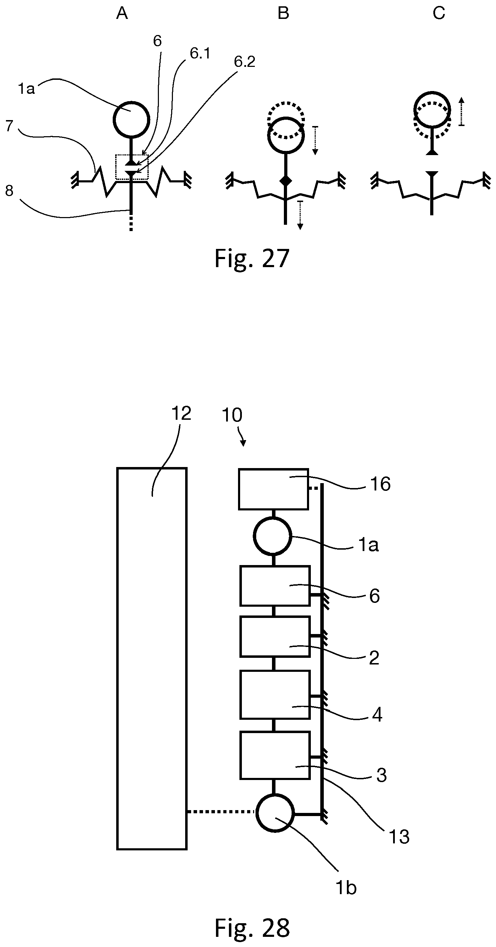

**Fig. 27:** Ausführungsbeispiel einer mechanischen Kupplung (6). A) Kupplung im initialen Zustand nach der Fertigung. Das Verbindungselement (1a) befindet sich in seiner initialen Position. Weiterhin sind die Stößel (6.1, 6.2) mechanisch voneinander getrennt, sodass keine Verschiebung des Verbindungselements auf den Läufer übertragen wird. B) Verbindungselement im ausgelenkten Zustand nach unten in Wirkrichtung. Die Verschiebung wird über die Kupplung an den Läufer übertragen. Über den Maximalwertspeicher wird die Läuferposition diskret fixiert. C) Verschiebung des Verbindungselements nach oben, woraufhin die Stößel der Kupplung ihren mechanischen Kontakt verlieren und die Kraftübertragung auf den Läufer unterbrochen wird. Der Läufer verharrt so weiterhin in seiner in (B) erreichten Position.

**Fig. 28:** Ausführungsbeispiel des mikromechanischen Messsystems mit Anbindung eines mechanischen Eingangswandlers (16) zur Erfassung weiterer physikalischer Messgrößen.

**Fig. 29:** Ausführungsbeispiel des Messsystems mit Anbindung einer seismischen Masse (16.1) als Beispiel für einen mechanischen Eingangswandler (16).

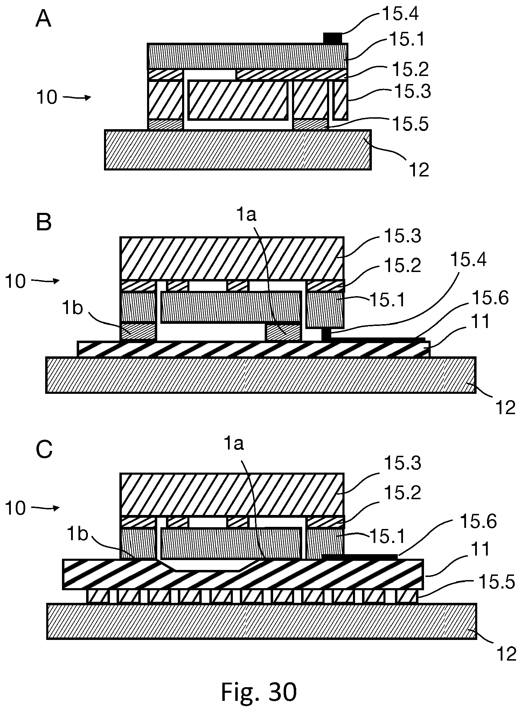

**Fig. 30:** Ausführungsbeispiele für einen möglichen technologisch umgesetzten Schichtaufbau des Dehnungssensors (10). A) Schichtaufbau, bei dem die mechanische direkte Verbindung zwischen Dehnungssensor und Messobjekt (12) über den Handlelayer erfolgt und dieser ebenfalls strukturiert ist. B) Schichtaufbau, bei dem der Handlelayer unstrukturiert ist und die Verbindung zwischen Dehnungssensor und Messobjekt über den Devicelayer erfolgt. Weiterhin zeigt B) eine indirekte Verbindung zwischen Dehnungssensor und Messobjekt über ein flexibles Gehäuse (11), über welches auch die elektrische Verbindung nach außen geführt wird. C) Schichtaufbau, bei dem der Handlelayer unstrukturiert ist und die Verbindung zwischen Dehnungssensor und Messobjekt über ein strukturiertes flexibles Gehäuse (11) realisiert wird, wobei das flexible Gehäuse Kavitäten aufweist und die stoffschlüssige Verbindung des Gehäuses mit den Verbindungselementen (1a, 1b) über Anodisches-, Eutektisches oder Fusionsbonden realisiert ist.

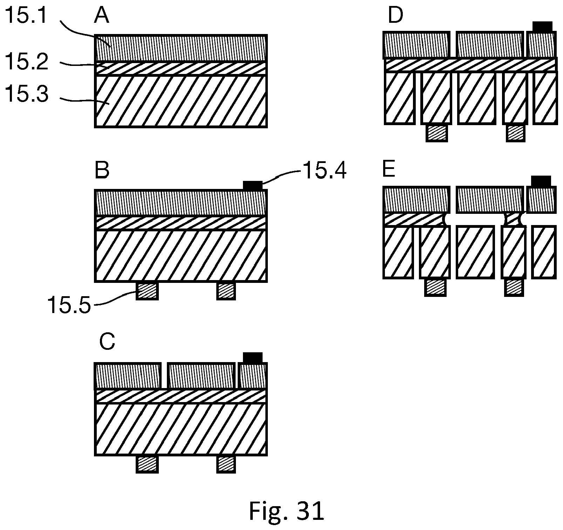

**Fig. 31:** Darstellung des Herstellungsverfahrens über ein SOI-Substrat. A) SOI-Substrat, B) Abgeschiedene und strukturierte Ebene eines Verbindungsmaterials (15.5) an Handlelayer (15.3) zur Verbindung des Dehnungssensors mit einem Messobjekt. Ferner zeigt B) eine abgeschiedene und strukturierte Elektrodenebene (15.4) auf dem Devicelayer (15.1) des SOI-Substrats. C) Anisotrop tiefgeätzte Strukturierung der mechanischen Komponenten am Devicelayer. D) Tiefgeätzte Strukturierung des Handlelayers zur Freistellung der Verbindungselemente. E) Freigestellte mechanische Strukturen am Device- und Handlelayer nach Entfernung der Opferschicht über beispielsweise Flusssäure.

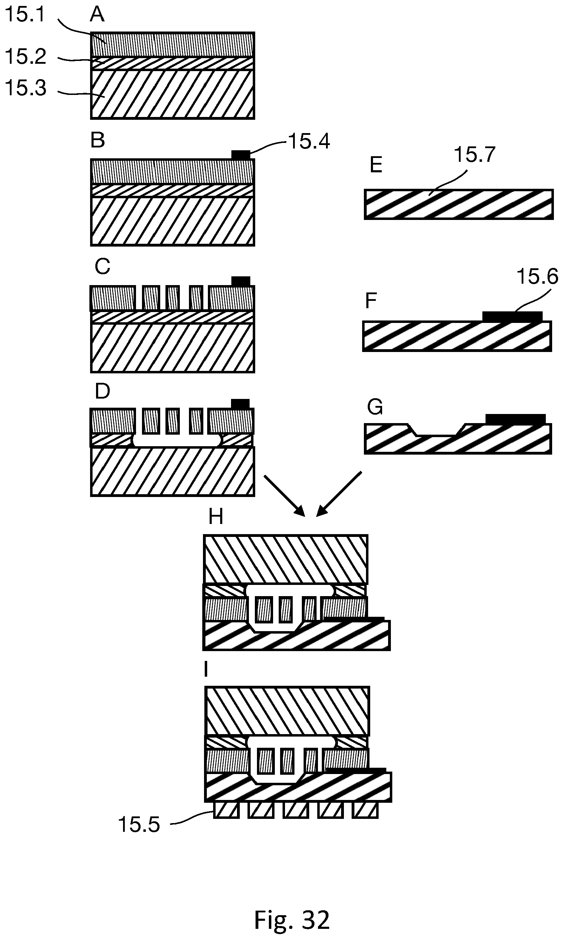

**Fig. 32:** Darstellung des Herstellungsverfahrens über ein SOI-Substrat und ein weiteres Substrat das als flexibles Gehäuse dient. A) SOI-Substrat, B) Abgeschiedene und strukturierte Elektrodenmaterials (15.4) auf dem Devicelayer (15.1), C) Strukturierung durch Tiefätzen des Devicelayers (15.1) zur Umsetzung der mechanischen Strukturen des Dehnungssensors, D) Freigestellte mechanischer Strukturen am Devicelayer nach Entfernung der Opferschicht über beispielsweise Flusssäure, E) Substrat des flexiblen Gehäuses, F) Abscheidung und Strukturierung von vom Dehnungssensor auf das Gehäuse herausgeführte Elektroden, G) Strukturierung der Oberfläche des Substrats des flexiblen Gehäuses (15.7) beispielsweise über Ätzen, H) Verbindung des SOI-Substrats mit dem Substrat des flexiblen Gehäuses beispielsweise über Bonden, I Abscheidung und optionale Strukturierung eines Verbindungsmaterials (15.5) zur stoffschlüssigen Verbindung des Dehnungssensors mit einem Messobjekt, wobei das Verbindungsmaterial vorzugsweise ein Lot und/ oder ein Schichtstapel reaktiver Metallschichten oder einen Klebstoff beinhaltet.

**Ausführliche Beschreibung der Erfindung**

Bevor die Erfindung im Detail beschrieben wird, wird darauf hingewiesen, dass diese Erfindung nicht begrenzt ist auf bestimmte Bestandteile der beschriebenen Vorrichtungen, oder beschrieben Herstellungsschritte der Verfahren, da diese Verfahren bzw. Vorrichtungen variieren können. Es wird auch darauf hingewiesen, dass die Terminologie hierfür nur zum Zweck für bestimmte beschriebene Ausführungsformen benutzt wird, und nicht absichtlich begrenzt ist.

Es soll angemerkt werden, dass in der Beschreibung und in den anhängenden Ansprüchen die einfache Form wie "ein/eine" oder "der/die/das" einen singulären und/oder pluralen Gegenstand beinhaltet, außer wenn es im Kontext klar anders formuliert ist. Für den Fall, dass ein Parameterbereich angegeben wurde, zählen die begrenzenden Zahlenwerte als Grenzwerte zum offenbarten bzw. beanspruchten Zahlenbereich dazu.

Die vorliegende Erfindung betrifft ein mikromechanisches Dehnungsmesssystem, das es ermöglicht, Dehnungen an beanspruchten Bauelementen oder Zugproben lokal aufgelöst zu bestimmen. Die Dehnungsmessungen können sowohl für eine kontinuierliche Überwachung von wartungsintensiven Bauelementen eingesetzt werden als auch für klassische Versuche der Werkstoffprüfung (Zugversuch, Schwingfestigkeitsversuch). Das erfindungsgemäße Dehnungsmesssystem erlaubt bei kontinuierlicher Energieversorgung eine kontinuierliche Messung und Abfrage der aktuell vorliegenden Dehnung an einer Probe. Dabei liefert der Sensor bereits ein diskretes oder digitales, vorzugsweise elektrisches Signal. Weiterhin kann das erfindungsgemäße Dehnungsmesssystem so ausgeführt werden, dass es auch ohne elektrische Energieversorgung kontinuierlich die Dehnung an einem Bauelement überwacht und den maximal erreichten Dehnungswert in einem mechanischen Speicher abspeichert. Elektrische Energie ist hierzu nicht erforderlich. Der gespeicherte Messwert kann später zu einem beliebigen Zeitpunkt elektronisch, z.B. über RFID ("radio-frequency identification") abgefragt werden. Weiterhin kann das erfindungsgemäße Dehnungsmesssystem so ausgeführt werden, dass es möglich ist, den mechanischen Maximalwertspeicher im Chip durch einen elektrischen Impuls zu löschen, um den Sensor so zurückzusetzen.

Die vorliegende Erfindung betrifft insbesondere ein mikromechanisches Messsystem zur Messung von Dehnungen an makroskopischen Objekten umfassend mindestens zwei Verbindungselemente (1a, 1b) zur Fixierung des Messsystems an dem zu untersuchenden und/oder zu überwachenden Messobjekt, wobei mindestens ein Verbindungselement gestellfest mit dem Substrat des Messsystems verbunden ist und mindestens ein Verbindungselement direkt oder indirekt mit dem Eingang eines mechanischen Verstärkers verbunden ist, einen mechanischen Verstärker (2) zur Signalverstärkung der dehnungsinduzierten mechanischen Verschiebung, und einen elektromechanischen Signalwandler (3) zur Wandlung der verstärkten mechanischen Verschiebung in ein elektrisches analoges oder digitales Signal.

Ein bevorzugter Gegenstand der vorliegenden Erfindung ist besagtes mikromechanisches Messsystem, welches weiterhin einen mechanischen Maximalwertspeicher (4) umfasst zur mechanischen Speicherung der maximal erreichten Dehnung des Messobjektes. Der besagte mechanische Maximalwertspeicher umfasst eine Kupplung (6). Bei einer bevorzugten Ausführungsform ist besagter mechanischer Maximalwertspeicher (4) rastzahnbasiert.

Ein weiterer bevorzugter Gegenstand der vorliegenden Erfindung ist besagtes mikromechanisches Messsystem mit mechanischem rastzahnbasiertem Maximalwertspeicher (4), weiterhin umfassend einen Rückstellmechanismus (5) zum Löschen des mechanischen Maximalwertspeichers.

Ein weiterer bevorzugter Gegenstand der vorliegenden Erfindung ist besagtes mikromechanisches Messsystem, welches weiterhin einen Kompensationsmechanismus (14) umfasst, der dazu ausgeführt ist eine isotrop wirkende Dehnung eines Messobjektes (12) zu kompensieren und von einem axial wirkenden Dehnungssignal zu entkoppeln.

Unter "Verbindungselementen" im Sinne der vorliegenden Erfindung sind Vorrichtungen und Bauelemente zu verstehen, die der Verbindung zwischen dem mikromechanischen Messsystem und dem zu untersuchenden Bauelement dienen. Die Verbindungselemente haben am Messsystem fest definierte Positionen und Abstände. Mindestens ein Verbindungselement ist fest mit dem Substrat des Mikrosystems verbunden, während mindestens ein weiteres translatorisch gegenüber dem Substrat verschiebbar ist.

Unter einem "mechanischen Verstärker" im Sinne der vorliegenden Erfindung wird ein Bauteil verstanden, dessen Aufgabe darin besteht, eine initial geringe translatorische Verschiebung in eine translatorische Verschiebung mit hoher Amplitude zu wandeln, um so eine sensitive Auflösung der Dehnung zu ermöglichen.

Unter einem "elektromechanischen Signalwandler" im Sinne der vorliegenden Erfindung wird ein Bauteil verstanden, dessen Aufgabe darin besteht, die Verschiebung am Ausgang des Verstärkers mechanisch zu diskretisieren und in ein diskretes, vorzugsweise binär codiertes elektrisches Signal zu wandeln.

Unter einem "mechanischen Maximalwertspeicher" im Sinne der vorliegenden Erfindung wird eine Vorrichtung oder ein Bauteil verstanden, dessen Aufgabe darin besteht, die maximal erreichte Dehnung in diskreten Schritten mechanisch zu speichern. Auf diese Weise lässt sich eine kontinuierliche Dehnungsüberwachung durchführen, ohne dass kontinuierlich eine Spannungsversorgung verfügbar sein muss. Der am Maximalwertspeicher gespeicherte Dehnungswert wird dabei stets überschrieben, sofern eine höhere Dehnungsamplitude registriert wird als zuvor gespeichert wurde.

Unter einem "makroskopischen Objekt" im erfindungsgemäßen Sinne wird ein Objekt verstanden dessen kleinste geometrische Abmessungen größer als die der erfindungsgemäßen Messvorrichtung sind. Unter einem "Messobjekt" im erfindungsgemäßen Sinne versteht man jegliche Objekte, Gegenstände oder Bauteile, die einer Dehnungsmessung oder Dehnungsüberwachung unterzogen werden können oder sollen.

Unter einem "flexiblen Gehäuse" im erfindungsgemäßen Sinne wird ein Bauteil verstanden, das im Vergleich zum Messobjekt ein geringes Elastizitätsmodul aufweist und das dazu ausgeführt ist, die Dehnung des Messobjektes mit vernachlässigbarem Widerstand an die Verbindungselemente des Dehnungssensors zu übertragen.

Unter einem "Substrat des mikromechanischen Dehnungsmesssystems" im erfindungsgemäßen Sinne wird das mechanische Gestell des Dehnungssensors verstanden, d.h. eine Vorrichtung, die als Träger und/oder zur Befestigung dient.

Unter einer "Opferschicht" im erfindungsgemäßen Sinne wird eine für die Fertigung des Dehnungssensors benötigte Materialebene verstanden, welche den Devicelayer und den Handlelayer mechanisch miteinander verbindet und die zur Freistellung der beweglichen Strukturen am Devicelayer partiell entfernt wird.

Unter "axialer Dehnung" oder "axial wirkender Dehnung" im erfindungsgemäßen Sinne wird die Richtung einer Dehnung entlang der sensitiven Achse des erfindungsgemäßen Dehnungssensors verstanden in deren Richtung die Dehnungswirkung erfasst werden soll.

Unter einem "Kompensationsmechanismus" im erfindungsgemäßen Sinne wird ein Bauteil verstanden, das dazu ausgeführt ist bei einer Überlagerung von isotrop und axialer Dehnungen die isotrop wirkende Dehnung zu kompensieren und von der axial wirkenden Dehnung zu separieren.

Unter einem "mechanischen Eingangswandler" im erfindungsgemäßen Sinne wird ein Bauteil verstanden, das dazu ausgeführt ist eine zu messende physikalische Größe in eine Verschiebungs- oder Dehnungsgröße zu wandeln die wiederum eine relative Verschiebung der gestellfesten (1b) und flexiblen Verbindungselemente (1a) hervorruft.

Unter einer "passiven" Messung/ Wandlung oder einem "passiven" Bauelement im erfindungsgemäßen Sinne wird ein Verfahren oder eine Vorrichtung verstanden, bei dem keine aktive Leistungs- oder Energieverstärkung eines Ausgangssignals erfolgt.

Unter einer "energieautarken" Messung oder einem "energieautarken" Speichern im erfindungsgemäßen Sinne wird ein Verfahren verstanden, bei dem eine Messung und/ oder Speicherung einer physikalischen Größe ohne zusätzliche externe Hilfsenergie erfolgt. Die Energie für die Messung und/ oder Speicherung wird direkt aus der Energie des Messsignals bezogen.

Bei einer bevorzugten Ausführungsform der vorliegenden Erfindung sind die Verbindungselemente (1a, 1b) des mikromechanischen Messsystems in einem bekannten Abstand am Messsystem angeordnet, wobei mindestens ein Verbindungselement gestellfest mit dem Substrat des Messsystems verbunden ist und mindestens ein weiteres federgelagert translatorisch oder rotatorisch verschiebbar am Messsystem gelagert ist. Dabei kann es mechanisch direkt oder indirekt über eine Kupplung mit dem mechanischen Verstärker verbunden sein.

Bei einer bevorzugten Ausführungsform der vorliegenden Erfindung wandelt der mechanische Verstärker (2) eine eingangsseitige translatorische Bewegung ausgangsseitig in eine verstärkte ebenfalls translatorische Verschiebung um. Dabei ist der Verstärker dazu ausgeführt, eine Wegverstärkung mit entweder konstantem Verstärkungsfaktor oder eine Wegverstärkung mit einer dehnungsabhängigen Verstärkung durchzuführen. Dabei ist der mechanische Verstärker dazu ausgeführt, eine vordefinierte Übertragungsfunktion der Verstärkung in Abhängigkeit der eingangsseitigen translatorischen Verschiebung umzusetzen und auf das ausgangsseitige Verschiebungssignal anzuwenden.

Dabei kann am Ausgang des mechanischen Verstärkers die dehnungsinduzierte verstärkte Verschiebung in eine digitale oder analoge elektrische Größe umgewandelt werden, insbesondere über einen elektromechanischen Wandler.

Bei einer bevorzugten Ausführungsform der erfindungsgemäßen Vorrichtung ist der elektromechanische Wandler in Form eines elektromechanischen Analog-Digital Wandlers (3) ausgeführt, der dazu ausgebildet ist eine Verschiebung am Ausgang des Verstärkers in ein diskretes binär codiertes paralleles elektrisches Spannungssignal zu überführten. Vorzugsweise handelt es sich bei dem ausgegebenen Binär-Code um Dual-Code, Gray-Code, BCD-Code, Unär-Code, Aiken-Code, Libaw-Craig-Code oder Summen-Code, aber auch andere binäre Codierungen sind denkbar.

Eine weitere Ausführungsform des erfindungsgemäßen mikromechanischen Messsystems sieht vor, dass über den mikromechanischen Verstärker und/ oder über den elektromechanischen Wandler eine vordefinierte Übertragungsfunktion auf das primäre Messsignal am Eingang des Verstärkers bzw. des elektromechanischen Wandlers angewandt wird.

Bei einer besonders bevorzugten Ausführungsform der vorliegenden Erfindung ist das mikromechanische Messsystem so ausgestaltet, dass die maximal erreichte Verschiebung am Ausgang des mechanischen Verstärkers durch einen mehrstufigen Rastmechanismus fixiert werden kann.

Das erfindungsgemäße mikromechanische Messsystem kann so ausgestaltet sein, dass es auch ohne kontinuierliche elektrische Energieversorgung eine autonome kontinuierliche Dehnungsmessung des Messobjektes durchführt und den maximal erreichten Dehnungswert in Form einer fixierten Verschiebung über einen mechanischen rastzahnbasierten Maximalwertspeicher speichert.

Weiterhin kann bei einer weiteren bevorzugten Ausführungsform der vorliegenden Erfindung ein Kompensationsmechanismus (14) am Messsystem, insbesondere am flexiblen Verbindungselement (1a) implementiert werden, der dazu ausgeführt ist eine mögliche thermisch induzierte isotrope Dehnung am Messobjekt (12) zu kompensieren und von einem axial wirkenden Dehnungssignal zu entkoppeln.

Neben der energieautarken und passiven Messung, Speicherung, Diskretisierung und Digitalisierung von Dehnungen an einem Messobjekt lässt sich das mikromechanische Messsystem um einen mechanischen Eingangswandler (16) erweitern, um anstelle der Dehnung an einem Prüfobj ekt weitere physikalische Messgrößen insbesondere Beschleunigung, Spannung, Strom, magnetische Feldstärke, elektrische Feldstärke oder Feuchtigkeit zu erfassen, zu speichern und/ oder zu diskretisieren und zu digitalisieren.

Die vorliegende Erfindung betrifft ferner ein Verfahren zur Herstellung eines mikromechanischen Messsystems gemäß der vorliegenden Erfindung, umfassend mindestens die folgenden Schritte:

(i) Bereitstellen einer Trägerschicht, die als Gestell fungiert ("Handlelayer"), und
(ii) Aufbringen einer weiteren Schicht ("Devicelayer"), die die mechanischen und elektromechanischen Komponenten des mikromechanischen Messsystems enthält.

Die Verbindungselemente (1a, 1b) können am "Handlelayer" und/oder am "Devicelayer" angebracht sein.

Bei einer bevorzugten Ausführungsform dieses Herstellungsverfahrens enthalten der "Handlelayer" und der "Devicelayer" Silizium und/oder eine dazwischen liegende weitere Schicht ("BOX-Layer") Siliziumdioxid, die als Opferschicht fungiert.

Bei einer bevorzugten Ausführungsform wird die Herstellung des mikromechanischen Messsystems gemäß der vorliegenden Erfindung mittels Lithographie und/oder durch anisotropes Ätzen durchgeführt.

Das mikromechanischen Messsystem kann in Form eines Silicium-Chips ausgeführt sein.

Bei einer bevorzugten Ausführungsform wird die Herstellung des mikromechanischen Messsystems dahingehend erweitert, dass mindestens die Verbindungselemente (1a, 1b) stoffschlüssig mit einem weiteren Substrat verbunden werden, dass als flexibles Gehäuse (11) dient.

Zur stoffschlüssigen Verbindung des besagten mikromechanischen Messsystems mit einem Messobjekt (12) kann zudem an der Oberfläche des flexiblen Gehäuses (11) oder direkt an den Verbindungselementen ein Lot und/ oder reaktive Metallschichten und/ oder ein Klebstoff abgeschieden und strukturiert werden.

Gegenstand der vorliegenden Erfindung ist weiterhin ein Verfahren zur Messung der Dehnung eines Messobjektes mit Hilfe eines mikromechanischen Messsystems gemäß der vorliegenden Erfindung, umfassend mindestens folgende Schritte:

(i) Direktes oder indirektes Verbinden des Messsystems umfassend mindestens zwei Verbindungselemente (1a, 1b) mit bekanntem Abstand mit der Oberfläche des Messobjektes (12) oder über ein relativ zum Messobjekt weiches Gehäuse (11);
(ii) Messung der Distanzänderung der Verbindungselemente (1a, 1b) und Verstärkung über einen mechanischen Verstärker, sodass eine verstärkte Verschiebung am Ausgang des Verstärkers zur Verfügung steht;
(iii) Wandlung des verstärkten Signals der Distanzänderung über einen elektromechanischen Wandler in eine analoge oder digitale elektrische Größe, vorzugsweise eine digitale elektrische Größe; und
(iv) Berechnung der Dehnung des Messobjektes aus der bekannten Distanz der Verbindungselemente und dem verstärkten Signal der Distanzänderung.

Die Berechnung der Dehnung des Messobjektes aus der bekannten Distanz der Verbindungselemente und dem verstärkten Signal der Distanzänderung erfolgt über das ausgegebene elektrische Signal.

Das erfindungsgemäße Verfahren kann zwischen besagten Schritten (iii) und (iv) einen weiteren Schritt umfassen, nämlich die Speicherung des erreichten Maximalwerts der Dehnung in einem mechanischen Maximalwertspeicher.

Das erfindungsgemäße Verfahren kann derart ausgestaltet sein, dass eine autonome kontinuierliche Dehnungsmessung des Messobjektes ohne kontinuierliche elektrische Energieversorgung durchgeführt und der maximal erreichte Dehnungswert in Form einer fixierten Verschiebung über einen mechanischen rastzahnbasierten Maximalwertspeicher gespeichert wird.

Das erfindungsgemäße Verfahren kann zwischen besagten Schritten (ii) und (iii) einen weiteren Schritt umfassen, bei dem die vorliegende Verschiebung am Eingang des elektromechanischen Wandlers über diesen durch Anlegen einer Spannung für die Dauer der Wandlung der Verschiebung in eine elektrisch Größe fixiert wird und nach Beendigung der Signalwandlung wieder freigegeben wird.

Das erfindungsgemäße Verfahren kann zwischen besagten Schritten (i) und (ii) einen weiteren Schritt umfassen bei dem eine uniaxiale Dehnung in Richtung der sensitiven Messachse des Dehnungssensor von einer überlagernden isotrop wirkenden Dehnung des Messobjektes über einen Kompensationsmechanismus entkoppelt wird und nur die uniaxiale Dehnung an den mikromechanischen Verstärker übertragen wird.

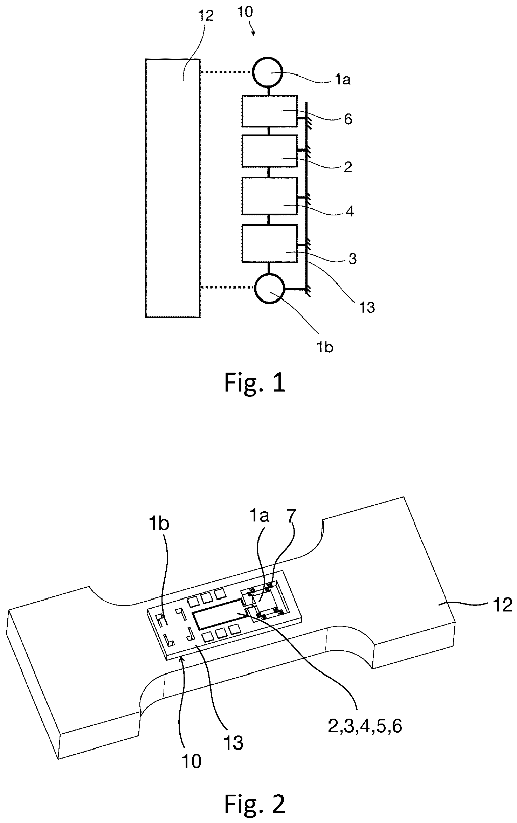

Fig. 1 zeigt die Hauptkomponenten des mikromechanischen Dehnungsmesssystems (10) sowie deren Anordnung umfassend mindestens zwei Verbindungselemente (1a, 1b), wobei ein Verbindungselement (1b) gestellfest mit dem Substrat des mikromechanischen Dehnungsmesssystems (13) verbunden ist und mindestens ein weiteres Verbindungselement gegenüber dem Substrat des mikromechanischen Dehnungsmesssystems (13) flexibel gelagert ist und der geometrische Abstand aller Verbindungselemente zueinander bekannt ist. Die Verbindungselemente stellen eine mechanische Kopplung zwischen mikromechanischem Dehnungsmesssystem (10) und Messobjekt (12) her. Weiterhin umfasst das mikromechanische Dehnungsmesssystem einen mechanischen Verstärker (2) sowie einen elektro-mechanischen Signalwandler (3). Zum Speichern der maximal erreichten Dehnung umfasst der Dehnungssensor zudem in einer erweiterten Ausführung eine Kupplung (6) und einen mechanischen Maximalwertspeicher (4). Die Reihenfolge und Anordnung der Hauptkomponenten können variieren.

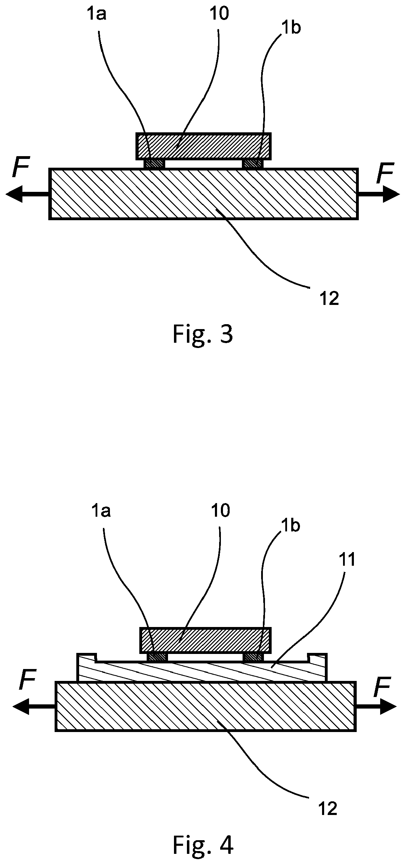

Die Anwendung und Handhabung des mikromechanischen Dehnungsmesssystems ähnelt der eines DMS. Der Dehnungssensor (10) wird, wie in Fig. 2 gezeigt, in Form eines Chips an die zu untersuchende Oberfläche eines Messobjektes (12) formschlüssig geklebt/gefügt. Dabei wird der Chip über mind. zwei definierte Punkte, den Verbindungselementen (1a, 1b), mit dem Werkstück verbunden. Der Abstand der Verbindungselemente (1a, 1b) zueinander ist hierbei genau bekannt und wird über eine Geometrie am Chip festgelegt. Mindestens eine der Verbindungselemente ist weich über Federelemente am Chip gelagert (1a) und lässt sich unter geringem Kraftaufwand translatorisch oder rotatorisch verschieben. Der andere Verbindungspunkt (1b) ist starr und gestellfest mit dem Substrat/Gestell des Chips verbunden. Weiterhin sind beide Verbindungselemente mechanisch mit dem Messobjekt (12) verbunden, wie in Fig. 3 gezeigt.

Denkbar ist auch, dass der Chip nicht unmittelbar am Messobjekt (12) montiert wird, sondern wie in Fig. 4 gezeigt indirekt über ein flexibles Gehäuse (11). Im einfachsten Fall kommt hierzu eine flexible Leiterkarte in Frage, auf der das mikromechanische Dehnungsmesssystem (10) über die zwei Verbindungselemente (1a, 1b) montiert wird. Das flexible Gehäuse (11) wird wiederum am Messobjekt (12) befestigt. So nimmt das flexible Gehäuse zunächst die Dehnung des Messobjektes (12) auf und überträgt diese dann an den eigentlichen Dehnungssensor. Das Gehäuse ist eine vorteilhafte Erweiterung, um den mechanische Dehnungssensor vor Schmutz oder Feuchtigkeit zu schützen oder um die Montage der Baugruppe "Dehnungssensor und Gehäuse" z.B. durch großflächige Klebeflächen zu optimieren.

Als Material für das flexibles Gehäuse kommen insbesondere Glas, Silicium, Keramik oder Glaskeramik-Substrate in Frage. In einer bevorzugten Ausführungsform wird für das flexible Gehäuse ein dünnes flexibles Substrat mit an Silicium angepasstem Wärmeausdehnungskoeffizient oder mit einem besonders geringem oder vernachlässigbar kleinen Wärmeausdehnungskoeffizient genutzt. Auch die Nutzung eines Materials mit an das Messobjekt (12) angepasstem Wärmeausdehnungskoeffizient ist denkbar. Das mikromechanische Dehnungsmesssystem (10) lässt sich vorzugsweise über Anodisches-, Eutektisches- oder Fusionsbonden mit dem flexiblen Gehäuses (11) hermetisch abdichten und verbinden. Durch die Materialwahl des flexiblen Gehäuses (11) wird der Unterschied der thermischen Längenausdehnung zwischen dem Messobjektes und dem mikromechanischen Dehnungsmesssystems bei der Messung berücksichtigt und kann hierdurch kompensiert werden, um eine thermisch induzierte mechanische Verspannung des Messsystems zu verhindern.

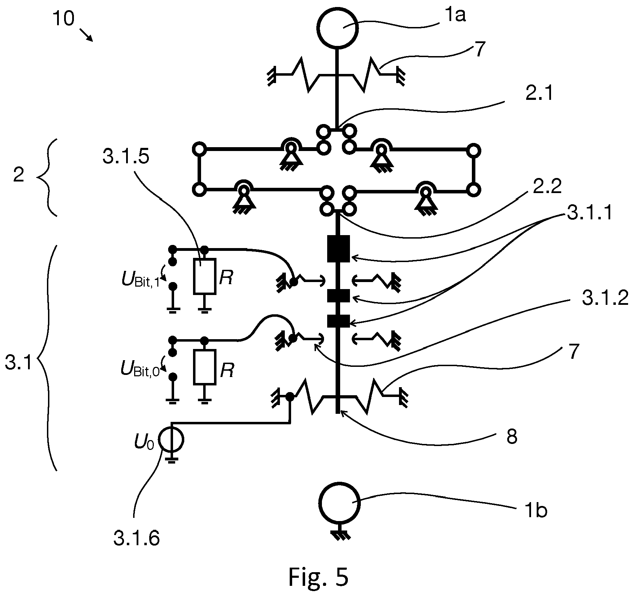

Fig. 5 zeigt eine mögliche Ausführungsform des Dehnungssensors (10).

Erfährt das Prüfobjekt (12) eine Dehnung, so werden am mikromechanischen Dehnungsmesssystem die Verbindungselemente (1a, 1b) relativ zueinander am Chip verschoben. Über die Verschiebungsamplitude und den bekannten Abstand der Verbindungselemente lässt sich so auf die vorliegende Dehnung schließen. Beträgt beispielsweise der initiale Abstand der Verbindungselemente zueinander 1 mm und wird der Abstand der Kontaktstellen um 10 $\mu$m vergrößert, so lässt sich daraus schließen, dass das Werkstück eine Dehnung von 1% ($\varepsilon$= 10 $\mu$m/1mm) erfährt.

Die relativen Verschiebungen, die die Verbindungspunkte/Verbindungselemente erfahren, sind wie im obigen Beispiel ersichtlich sehr gering, sodass die Verschiebungsamplitude (hier 10 $\mu$m) durch einen *mechanischen Verstärker* (2) in Form eines Hebelmechanismus verstärkt werden muss. Hierzu wird ein mikromechanischer Verstärker (2) eingesetzt, der die geringe Verschiebung am Verstärkereingang (2.1) in eine größere Verschiebung am Verstärkerausgang (2.2) wandelt. Die verstärke Verschiebung wird am Ausgang an einen translatorisch geführten Läufer (8) übertragen. Der mechanische Verstärker (2) ist zudem dafür ausgeführt, eine vordefinierte Übertragungsfunktion der Verstärkung in Abhängigkeit der Verschiebung umzusetzen. Neben einer konstanten Weg-Verstärkung werden so auch nicht-lineare Verstärkungsverläufe in Abhängigkeit der Eingangsverschiebung ermöglicht. Somit gelingt es mit Hilfe des Verstärkers (2) den Sensitivitätsverlauf der Dehnungsmessung für verschiedene Wertebereiche anzupassen.

Zur elektrischen Erfassung der Verschiebung und damit der Dehnung des Prüfobjektes wird ein elektromechanischer Signalwandler (3) am Ausgang des mechanischen Verstärkers (2) implementiert. Hierzu kann an dem Läufer (8) der am Verstärkerausgang (2.2) montiert ist, eine geometrische Codierung in Form von *Kontaktelektroden* (3.1.1) eingeprägt werden. Weiterhin können sich neben dem Läufer (8) mehrere gestellfeste aber flexibel gelagerte Gegenelektroden (3.1.2) befinden, die mit den Kontaktelektroden am Läufer entweder in Kontakt kommen oder sich stark annähern, sobald der Läufer translatorisch verschoben wird.

Die am Läufer montierten Elektroden (3.1.1) und die gestellfest gelagerten Elektroden (3.1.2) sind im nichtausgelenkten Zustand des Läufers zunächst galvanisch getrennt. Zur elektrischen Erfassung der Verschiebung des Läufers wird eine elektrische Gleich- oder Wechselspannung $U_0$ am Läufer (8) beispielsweise über eine leitfähige Führungsfeder (7) eingeleitet und angelegt. Gleichzeitig wird die Spannung an den gestellfesten Kontaktelektroden (3.1.2) abgegriffen und gemessen. Über hochohmige Pull-down bzw. Pull-up Widerstände (3.1.5) wird das elektrische Potential an den Gegenelektroden (3.1.2) auf ein bekanntes und festes Potential gezogen, solange die gestellfesten Gegenelektroden (3.2.1) die beweglichen Fingerelektroden am Läufer (3.1.1) nicht berühren. Da kein Strom an den Pull-down oder Pull-up Widerständen fließt, fällt keine Spannung an den Widerständen ab. Kommt es hingegen zur Berührung oder zu einer Verringerung des Abstandes zwischen einer beweglichen Fingerelektrode (3.1.1) mit einer gestellfeste Gegenelektrode (3.1.2), so wird ein elektrischer Kontakt zwischen den beiden Elektroden hergestellt bzw. die Impedanz zwischen den beiden Kontakten wird verringert und es fällt eine Spannung am zugehörigen Pull-up oder Pull-down Widerstand (3.1.5) ab. Über die Anordnung der Elektroden am Läufer lassen sich für diskrete Positionen des Läufers ein digitaler Code an den Gegenelektroden abbilden.

Alternativ zu dieser diskreten schalterbasierten elektrischen Positionsbestimmung besteht auch die Möglichkeit, die Position des Läufers kapazitiv oder piezoresistiv auszuwerten.

Der Dehnungssensor wie bisher beschrieben ist in der Lage, kontinuierlich Dehnungsmessungen durchzuführen. Es werden bisher noch keine Werte mechanisch gespeichert. Die Dehnungsmessung ist daher wie bisher beschrieben nur aktiv, also nur unter Nutzung einer elektrischen Energiequelle möglich. Häufig ist aber keine kontinuierliche Abfrage der Messwerte notwendig. Oft genügt die Information, ob ein gewisser Maximalwert der Dehnung erreicht oder überschritten wurde.

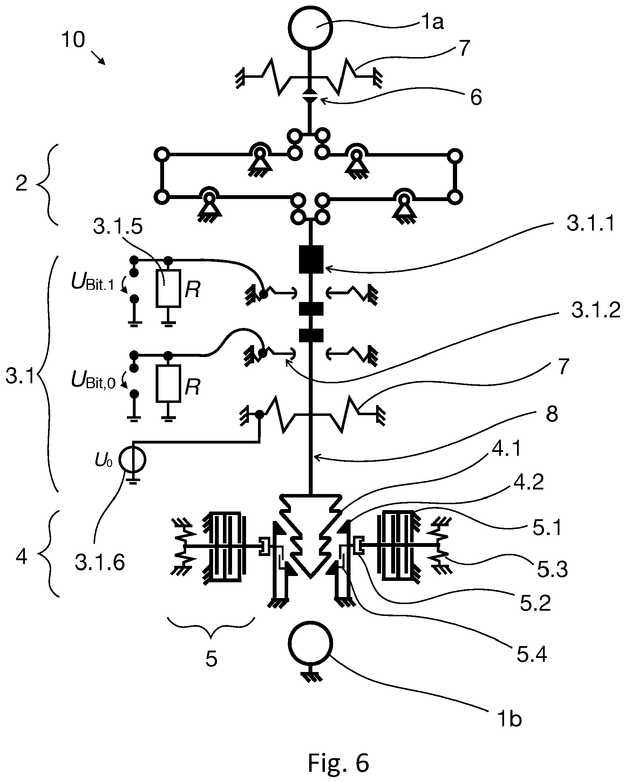

Gemäß einer weiteren Ausführungsform der vorliegenden Erfindung wird es mittels einer Erweiterung des Systems ermöglicht, die Maximalwerte der Dehnung zu speichern. Hierzu wird am Läufer neben dem elektromechanischen Wandler noch ein *mechanischer Maximalwertspeicher* (4) implementiert. Dieser umfasst, wie in Fig. 6 gezeigt, eine oder mehrere gestellfeste Sperrklingen (4.2) und Rastelemente (4.1) mit zugehörigen Rastzähnen (4.3), die den Läufer in seiner maximal erreichten Position fixieren.

Um eine erneute Messung zu ermöglichen, kann der Maximalwertspeicher optional so ausgestaltet sein, dass er sich über einen Rückstellmechanismus (5) wieder in seinen Ursprungszustand zurücksetzen lässt, wobei der gespeicherte Maximalwert gelöscht wird.

Wird während einer Messung nur kurzzeitig eine besonders hohe Dehnung gemessen und über den Maximalwertspeicher gespeichert, und bewegt sich das Verbindungselement bzw. der Läufer anschließend wieder in seine Ausgangsposition oder darüber hinaus zurück, so wird das gesamte mikromechanische System in einen Zustand hoher mechanischer Belastung versetzt, da durch die Dehnung des Bauelementes an beiden Verbindungselementen des Sensors gezogen bzw. gedrückt wird und die Sperrklingen am Maximalwertspeicher eine hohe Zugbeanspruchung erfahren. Zur Entlastung des Systems kann daher eine Kupplung (6) zwischen einem der Verbindungselemente (1a, 1b) und dem mechanischem Maximalwertspeicher (4) implementiert werden. Die Kupplung (6) ist dazu ausgeführt, eine durch das Verbindungselement eingeleitete Kraft selektiv nur in eine dafür vorgesehene Richtung an den mechanischen Maximalwertspeicher (4) weiterzuleiten.

Der Dehnungssensor wie bisher beschrieben ist in der Lage Dehnungen eines Messobjektes zu erfassen, ohne dabei zwischen mechanisch induzierter uniaxialer Dehnung und thermisch induzierter isotroper Dehnung infolge einer Wärmeausdehnung zu unterscheiden. In einer weiteren vorteilhaften Ausführungsform wird die erfindungsgemäße Vorrichtung daher noch um einen *Kompensationsmechanismus* (14) erweitert, der dazu ausgeführt ist die isotrope Wärmeausdehnung eines Messobjektes zu kompensieren und von einem uniaxialen Dehnungssignal des Messobjektes zu entkoppeln, sodass rein mechanisch induzierte temperaturunabhängige Dehnungsmessungen ermöglicht werden.

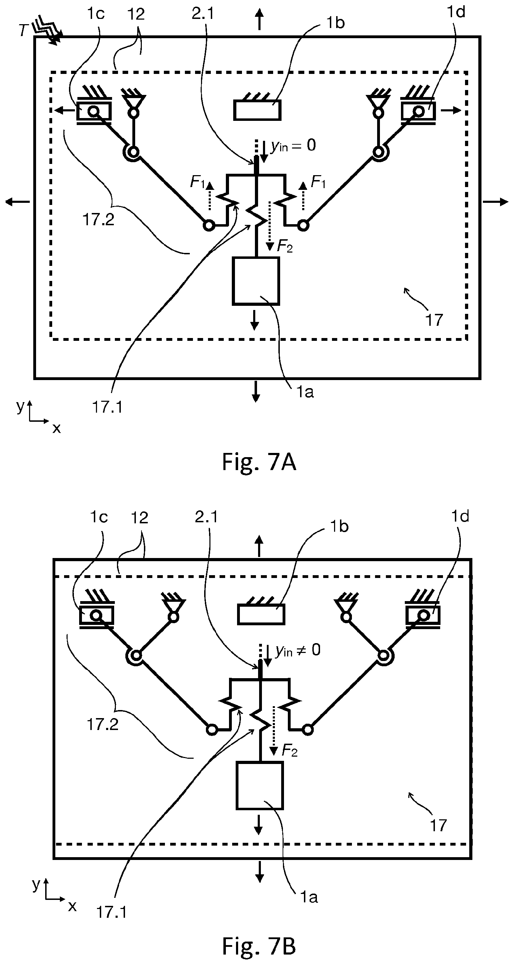

Fig. 7A zeigt einen möglichen Aufbau des Kompensationsmechanismus (14). In einer bevorzugten Ausführungsform ist der Kompensationsmechanismus (14) symmetrisch aufgebaut und wird zwischen Verstärkereingang (2.1) und dem flexible gelagerten Verbindungselement (1a) eingebaut. Auch eine beliebige Positionierung innerhalb der Messvorrichtung ist möglich. Der Kompensationsmechanismus (14) umfasst mindestens ein zusätzliches flexibel gelagertes Verbindungselement (1c, 1d) sowie mindestens einen Umlenkmechanismus (14.2), der dazu ausgeführt ist eine Verschiebung des Verbindungselements (1c, 1d) in seitlicher Richtung in eine Verschiebung in Längsrichtung zu transformieren. Zudem umfasst der Mechanismus einen Kraftransformator (14.1) beispielsweise in Form einer Feder, der dazu ausgeführt ist eine Verschiebung in eine Kraft $F$ umzuwandeln.

Fig. 7A zeigt auch die Funktion des Kompensationsmechanismus (14): Dehnt sich das zu überwachende Messobjekt (12) z.B. aufgrund einer Temperaturänderung isotrop, also gleichmäßig in alle Richtungen aus, so ändert sich zum einen der Abstand zwischen den Verbindungselementen (1a, 1b) in Längsrichtung (y-Richtung) und zum anderen der Abstand der Verbindungselemente (1c, 1d) in seitlicher Richtung (x-Richtung). Die seitliche Verschiebung der zusätzlichen Verbindungselemente (1c, 1d) wird über den Umlenkmechanismus (14.2) in eine Längsverschiebung gedreht und über den Krafttransformator (14.1) in eine Kraft $F_1$ in Längsrichtung (y-Richtung) gewandelt. Die Kraft $F_1$ liegt dann direkt oder indirekt am Eingang des mechanischen Verstärkers (2.1) an. Das flexibel gelagerte Verbindungselement (1a) ist in dieser Konfiguration ebenfalls über einen Krafttransformator (14.1) mit dem Eingang des Verstärkers (2.1) verbunden. Jedoch wird bei isotroper Ausdehnung über das flexible gelagerte Verbindungselement (1a) und den zugehörigen Krafttransformator (14.1) eine zur Kraft $F_1$ betragsmäßig gleiche aber entgegengesetzte Kraft $F_2$ generiert, sodass sich die resultierende Kraft am Verstärkereingang (2.1) kompensieren und es zu keiner Verschiebung $y_{in}$ des Verstärkereingangs (2.1) kommt. Somit wird die isotrop wirkende Dehnung nicht über den Verstärker verstärkt.

Wirkt hingegen eine zusätzliche Dehnung in axialer Längsrichtung wie in Fig. 7B gezeigt, so wird nur der isotrope Anteil der Dehnung über den Kompensationsmechanismus kompensiert während die zusätzliche (mechanisch induzierte) axiale Dehnung in Längsrichtung (y-Richtung) an dem mechanischen Verstärker weitergeleitet und in Folge dessen verstärkt wird.

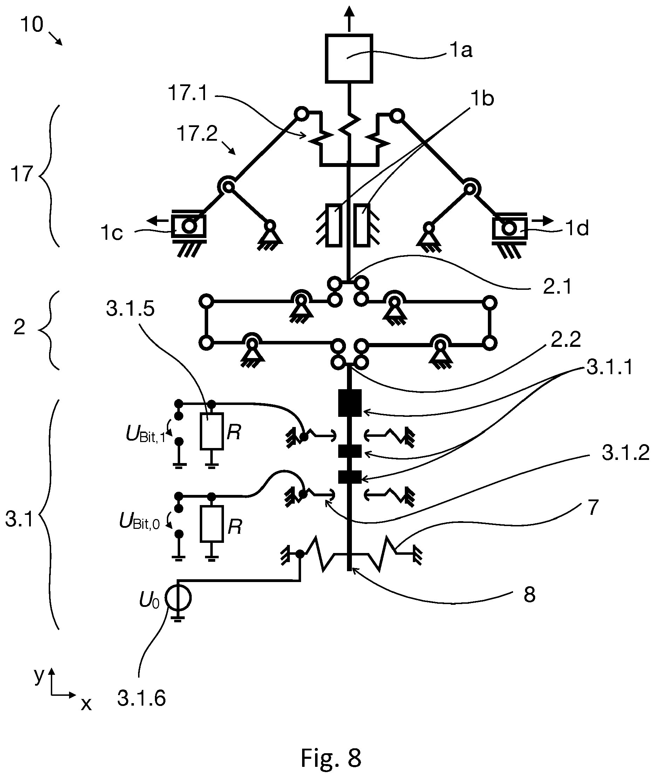

Fig. 8 zeigt vereinfacht ein Ausführungsbeispiel bei dem der Kompensationsmechanismus (14) an der erfindungsgemäßen Messvorrichtung ohne Maximalwertspeicher montiert ist. Der Kompensationsmechanismus (14) kann auch in Kombination mit einem Maximalwertspeicher betrieben werden. Die Reihenfolge und Verschaltung der Komponenten können variieren.

Die erfindungsgemäße Vorrichtung wie bisher beschrieben kann anstelle einer Dehnungsmessung durch eine einfache Modifikation auch zur Messung weiterer physikalischer Größen genutzt werden. Hierzu wird das flexibel gelagerte Verbindungselement (1a) nicht direkt mit dem Prüfobjekt (12) verbunden, sondern mit einem mechanischen Eingangswandler (16). Denkbar ist beispielsweise, dass zur Messung und Speicherung der Amplitude einer Beschleunigungseinwirkung auf ein Prüfobj ekt (12) nur das gestellfeste Verbindungselement (1b) am Prüfobj ekt montiert wird, während das flexible gelagerte Verbindungselement (1a) mit einer seismischen Prüfmasse (16.1) verbunden ist. Analog zur Dehnungsmessung bewirkt die Auslenkung der Prüfmasse (16.1) ebenfalls eine relative Verschiebung zwischen den gestellfesten und flexiblen Verbindungselementen (1a, 1b) die entsprechend dem Sensor- und Speicherkonzept der erfindungsgemäßen Vorrichtung erfasst, verstärkt, gespeichert und direkt digitalisiert wird.

**Beispiele**

Die vorliegende Erfindung wird durch die im Folgenden gezeigten und diskutierten Beispiele und Zeichnungen genauer erläutert. Dabei ist zu beachten, dass die Beispiele und Zeichnungen nur beschreibenden Charakter haben und nicht dazu gedacht sind, die Erfindung in irgendeiner Form einzuschränken.

**Beispiel 1:** Verbindungselement

Die Verbindungselemente (1) dienen der Verbindung zwischen Dehnungssensor (10) und dem zu untersuchenden Messobjekt (12) oder dem zwischen Messobjekt (12) und Dehnungssensor (10) befindlichem Gehäuse (11). Die Verbindungselemente (1a, 1b) haben am Dehnungssensor (10) fest definierte Positionen und Abstände. Je größer der Abstand zwischen den Verbindungselementen, desto sensitiver ist die Dehnungsmessung, jedoch desto unpräziser ist die Ortsauflösung der Dehnungsmessung. Mindestens ein Verbindungselement ist fest mit dem Substrat des Mikrosystems verbunden (1b), während mindestens ein weiteres translatorisch gegenüber dem Substrat/Gestell (1a) verschiebbar, z.B. über Festkörpergelenke oder Führungsfedern, gelagert ist. Über die Verbindungselemente wird die Dehnung des Prüfobjektes an den Dehnungssensor (10) in Form einer Verschiebung übertragen.

Bei einer bevorzugten Ausführungsform unterscheidet sich die Oberfläche der Verbindungselemente von den restlichen Oberflächen des mikromechanischen Messsystems darin, dass sie eine zum Fügen optimierte Oberflächentopologie und -morphologie aufweisen. Beispielsweise wird an den Verbindungsflächen ein zusätzlicher Haftvermittler abgeschieden, der das lokale Kleben oder Löten der Verbindungselemente an einem Werkstück oder Prüfling erlaubt, während die anderen Oberflächen des Chips nicht vom Lot oder vom Klebstoff benetzt werden. Auch das Abscheiden von Lot, Klebstoff oder von reaktiven Schichten aus z.B. Ni/Al an den Verbindungsoberflächen ist möglich, um so einen lokalen Schweißprozess zu realisieren.

**Beispiel 2:** Mechanischer Verstärker

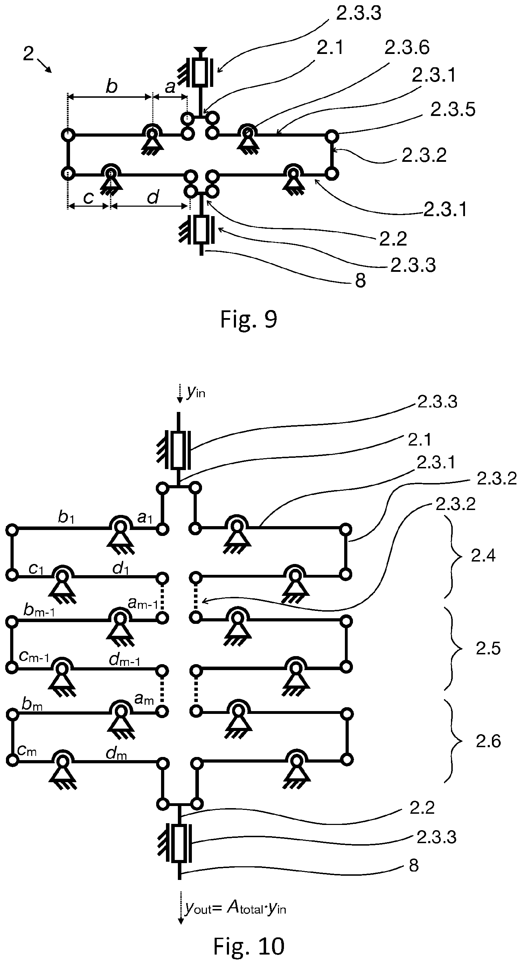

Eine technische Umsetzung des mechanischen Verstärkers wird in Fig. 9 dargestellt.

Der Mechanismus ist symmetrisch aufgebaut und umfasst mindestens zwei parallel angeordnete *Hebel* (2.3.1) auf jeder Seite. Jeder Hebel (2.3.1) ist rotatorisch gegenüber dem Gestell/ Substrat (13) gelagert. Die Hebel (2.3.1) sind über eine Seite jeweils über einen *Hebelverbinder* (2.3.2) paarweise miteinander gekoppelt. Auf diese Weise wird die Hebelverstärkung des ersten Hebels durch den zweiten, dritten, usw. noch einmal verstärkt, sodass sich die Gesamtverstärkung des mechanischen Verstärkers $A_{\text{total}}$ näherungsweise aus der Multiplikation der einzelnen Hebelverstärkungsfaktoren $A_j$ ergibt:

$$A_{\text{total}} = \prod_{j=1}^{j=m} A_j$$

Durch die multiplikative Verknüpfung ist es möglich, relativ hohe Verstärkungsfaktoren von vorzugsweise 1...1000 zu erreichen und den Verstärker auf sehr kleinem Raum umzusetzen. Für den in Fig. 9 gezeigten Verstärker gilt für den Verstärkungsfaktor $A_{total}$ in Abhängigkeit seiner Segmentlängen a, b, c und d:

$$A_{total} = \frac{y_{out}}{y_{in}} \approx \frac{b}{a} \cdot \frac{d}{c} \qquad\qquad (1)$$

Fig. 10 zeigt eine weitere Ausführungsform des mechanischen Verstärkers. Bei dieser Ausführungsform werden $m$ Hebel seriell über Hebelverbinder miteinander verbunden. Allgemein ergibt sich so ein Verstärkungsfaktor $A_{total}$ von:

$$A_{total} = \frac{y_{out}}{y_{in}} = \prod_{j=1}^{j=m} A_j \approx \prod_{j=1}^{j=m} \frac{b_j}{a_j} \cdot \frac{d_j}{c_j}$$

Um eine eingangsseitige translatorische Verschiebung auch ausgangsseitig wieder in eine rein translatorische Verschiebung zu wandeln, befinden sich am Ein- und Ausgang (2.1 und 2.2) des Verstärkers je ein Schubgelenk (2.3.3).

Die Gelenke des mikrosystemtechnisch umgesetzten zweidimensionalen Verstärkungsmechanismus können in Form von Festkörpergelenken umgesetzt werden, um so Abrieb an der Gelenkachsen zu vermeiden. Auf Schubgelenke am Ein- und Ausgang kann in diesem Fall verzichtet werden, da durch die Rückstellkräfte der Festkörpergelenke und dem symmetrischen Aufbau des Mechanismus jegliche Querkräfte am Ein- oder Ausgang kompensiert werden. Eine eingangsseitig translatorische Verschiebung wird so in eine ebenfalls reine translatorische Verschiebung am Ausgang umgewandelt. Zusätzliche Schubgelenke sind daher optional bei der Verwendung von Festkörpergelenken.

Neben der Weg-Verstärkung lässt sich über den mechanischen Verstärker (2) auch die Eingangs- und Ausgangssteifigkeit des Verstärkers (2) einstellen. Als Eingangssteifigkeit $c_{in}$ wird hier das Verhältnis von Eingangskraft $F_{in}$ zu Eingangsverschiebung $y_{in}$ am Ein- bzw. Ausgang definiert:

$$c_{in} = \frac{F_{in}}{y_{in}}$$

Und für die Ausgangssteifigkeit $c_{out}$ gilt entsprechend:

$$c_{out} = \frac{F_{out}}{y_{out}}$$

Die Steifigkeit am Verstärker wird durch die Steifigkeit $c_j$ der Festkörpergelenke sowie die Verstärkung der einzelnen Hebel bestimmt. Je steifer der Systemeingang, desto höher ist der Kraftaufwand, der aufgebracht werden muss, um das Eingangselement des Verstärkers zu verschieben.

Sollen wie in Fig. 10 gezeigt mehrere Hebelpaarungen (2.4) seriell verbunden werden, so ist darauf zu achten, dass die Eingangssteifigkeit der j-ten Hebelpaarung (2.5) der Größenordnung der Ausgangssteifigkeit der (j-1)-ten Hebelpaarung (z.B. 2.4) entspricht oder kleiner ausfällt:

$$c_{in,j} \leq c_{out,(j-1)}$$

Ist dies nicht gegeben, so ist der Kraftaufwand, der an der j-ten Hebelpaarung aufgebracht werden muss, verhältnismäßig hoch, sodass entweder das System zerstört wird oder sich die Festkörpergelenke oder die Hebel stark biegen, sodass die Genauigkeit der berechneten Ausgangsverschiebung nicht gegeben ist.

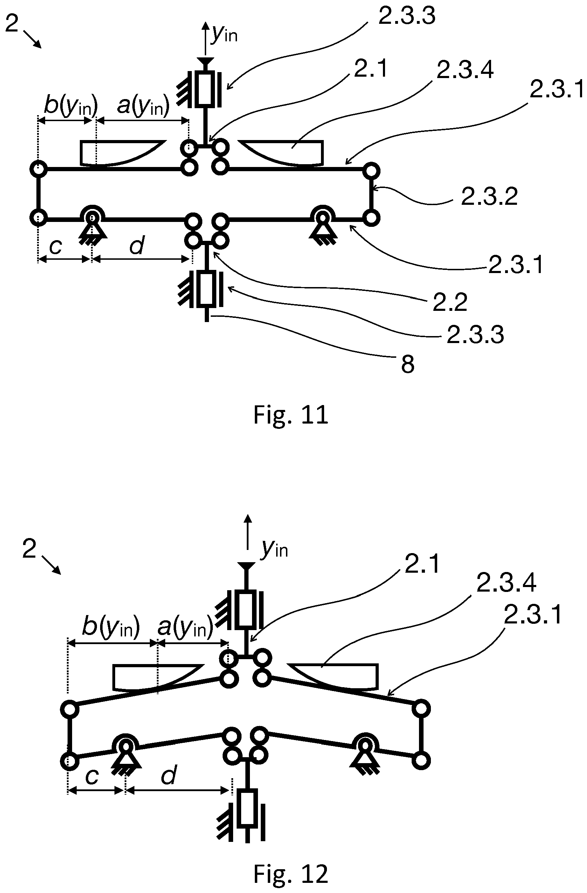

Fig. 11 zeigt eine erweiterte Ausführung des Verstärkers (2) mit implementierter Übertragungsfunktion, bei der ermöglicht wird, neben einem konstanten Verstärkungsfaktor einen verschiebungsabhängigen Verstärkungsfaktor auf die eingangsseitige Verschiebung anzuwenden.

In einer bevorzugten Ausführungsform stellt die Verstärkung $A_{total}(y_{in})$ eine Funktion der Eingangsverschiebung $y_{in}$ dar. Die Funktion der Verstärkung $A_{total}(y_{in})$ kann dabei sowohl entsprechend

$$A_{total}(y_{in}) = A_{total}$$

konstant sein oder aber auch einer vordefinierten Funktion folgen. So kann die Verstärkung beispielsweise linear mit der Eingangsverschiebung $y_{in}$ und damit mit der Dehnung zunehmen:

$$A_{\text{total}}(y_{\text{in}}) = A_{\text{total}} \cdot y_{\text{in}}$$

Auch eine quadratisch zunehmende Verstärkung der Form

$$A_{\text{total}}(y_{\text{in}}) = A_{\text{total}} \cdot y_{\text{in}}^2$$

sowie logarithmische oder Wurzelfunktionen lassen sich am Verstärker implementieren.

Bei einer bevorzugten Ausführungsform werden hierzu am Hebelmechanismus mindestens eines der Gelenke, die den Hebelmechanismus mit dem Substrat verbinden, durch mindestens eine Kurvenscheibe (2.3.4) ersetzt, wobei die vordefinierte Übertragungsfunktion an der Kurvenscheibe (2.3.4) implementiert ist. Beim Auslenken des zugehörigen Hebels (2.3.1) wird dieser nicht um einen durch ein festes Gelenk definierten zum Substrat fixierten Punkt gedreht, sondern bewegt sich entlang der Kurvenscheibe (2.3.4). Da der Hebel an der Kurvenscheibe entlang gleitet, wandert auch der Drehpunkt in Abhängigkeit der Verschiebung, wodurch sich der zugehörige Abstand a oder b oder c oder d und damit die Verstärkung in Abhängigkeit der Verschiebung verändert, wie in Fig. 12 gezeigt wird.

**Beispiel 3:** Elektromechanischer Wandler

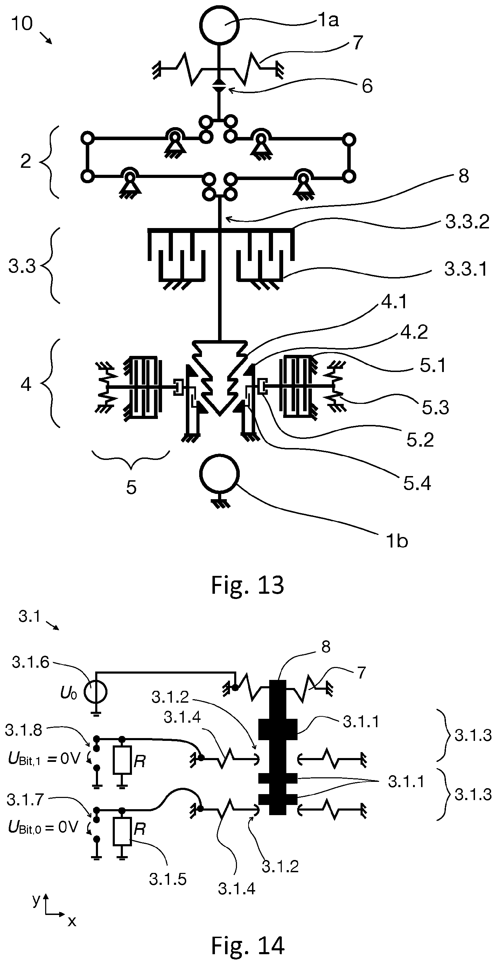

Die Aufgabe des elektromechanischen Wandlers (3) besteht darin, die Verschiebung am Ausgang des Verstärkers (2.2) in ein elektrisches Signal zu wandeln. Dafür gibt es verschiedene Möglichkeiten einer elektromechanischen Zustandserfassung. So lässt sich die Verschiebung beispielsweise über einen kapazitiven Wandler (3.3), wie in Fig. 13 gezeigt, erfassen. Hierzu können isolierte frei bewegliche Elektroden am Mikrosystem umgesetzt werden, die einen Parallelplattenkondensator bilden. Die Elektroden lassen sich zueinander verschieben und erlauben so die Variation der Kapazität des Kondensators. Über die Auswertung der Kapazität lässt sich so die Verschiebung des Läufers (8) bestimmen. Der Nachteil dieser Lösung besteht darin, dass das Messsystem nur in Kombination mit einer Kapazitätsmessschaltung genutzt werden kann, wodurch auch parasitäre Effekte wie thermisches Rauschen den Messwert beeinflussen.

Um auf eine aufwendige elektrische Schaltung zu verzichten, wird daher bevorzugt ein kontaktbasierter Wandler genutzt. In Fig. 14 wird das allgemeine Funktionsprinzip des Wandlers gezeigt.

Der Wandler umfasst nw gestellfeste und flexibel gelagerte Gegenelektroden (3.1.2) sowie dazu paarweise zugehörige Fingerelektrodengruppe (3.1.3). Die Fingerelektrodengruppen sind dabei am Läufer (8) des Dehnungssensors montiert und lassen sich translatorisch entlang der Läuferrichtung mit dem Läufer verschieben. Die Gegenelektroden sind hingegen gestellfest entlang der Fingerelektrodengruppen positioniert. Eine Fingerelektrodengruppe (3.1.3) umfasst eine oder mehrere Fingerelektroden (3.1.1), die dadurch gekennzeichnet sind, dass sie bei einer definierten translatorischen Auslenkung des Läufers einen elektrischen Kontakt mit den gestellfesten Gegenelektroden herstellen oder es zwischen Gegenelektroden und Fingerelektroden zu einer Impedanzänderung kommt, sobald sich beide Elektroden gegenüberstehen. Über die Anordnung der Elektroden wird die Position des Läufers eindeutig geometrisch codiert.

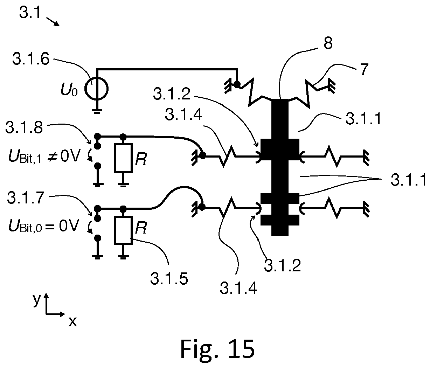

Zur elektrischen Erfassung der diskreten Läuferposition wird am Läufer eine elektrische Spannung $U_0$ angelegt. Gleichzeitig wird die Spannung an den gestellfesten Gegenelektroden (3.1.2) gemessen bzw. abgegriffen. Solange sich die Gegenelektroden (3.1.2) und die Fingerelektroden (3.1.1) am Läufer nicht gegenüberstehen oder berühren, liegt an den Gegenelektroden ein erstes definiertes elektrisches Potential, beispielsweise 0 V an. Dieses definierte erste elektrische Potential wird z.B. über Pull-down oder Pull-up Widerstände an den gestellfesten Gegenelektroden gewährleistet. Wird nun der Läufer verschoben, sodass sich je eine Fingerelektrode und eine Gegenelektrode gegenüberstehen, so wird die am Läufer angelegte Spannung $U_0$ von den Fingerelektroden an die Gegenelektroden übertragen, sodass nun an der entsprechenden Gegenelektrode ein vom initialen Zustand verschiedenes zweites elektrisches Potential (idealerweise $U_0$) anliegt. Gleichzeitig fällt über dem zugehörigen Pull-up oder Pull-down Widerstand eine Spannung ab. Figur 15 zeigt exemplarisch, wie der Verschiebungszustand des Läufers an den Pull-down Widerständen abgegriffen wird. Im gezeigten Zustand sind die Gegen- und Fingerelektroden von Bit 1 in Kontakt, sodass eine Spannung ungleich 0 V an dem zugehörigen Pull-down Widerstand abfällt. Die Finger- und Gegenelektroden von Bit 0 sind nicht kontaktiert, folglich fällt keine Spannung am zugehörigen Pull-down Widerstand ab.

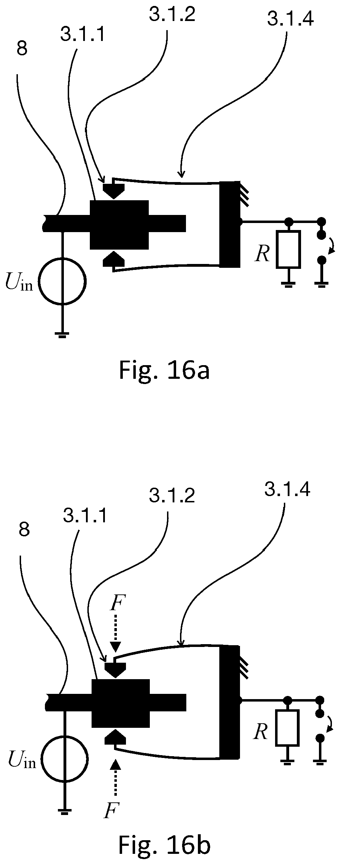

Der Abstand zwischen Fingerelektroden und Gegenelektroden kann einerseits überlappend gestaltet sein, sodass bei der Verschiebung der Fingerelektroden diese an den Gegenelektroden entlang gleiten. Eine solche Konfiguration wird beispielsweise in Fig. 16a gezeigt. Andererseits können die Gegenelektroden und Fingerelektroden auch in einem geringen Abstand zueinander positioniert sein wie in Fig. 16b dargestellt. Durch das Anlegen einer elektrischen Spannung zwischen den beiden Elektroden entsteht dann eine elektrostatische Kraft, die die flexibel gelagerten Gegenelektroden an die Fingerelektroden drückt, sodass es zu einer Spannungsübertragung kommt. Der Vorteil der Ausführungsform, bei der die Elektroden in einem geringem Abstand zueinander stehen und sich nur beim Anlegen einer Spannung berühren, besteht darin, dass es zu einer geringen Reibung zwischen den Elektroden kommt und sich die Elektroden nur beim eigentlichen elektrischen Auslesen mechanisch kontaktieren. Durch Anlegen einer Wechselspannung kann die mechanische Kontaktierungszeit zudem sehr kurzgehalten werden.

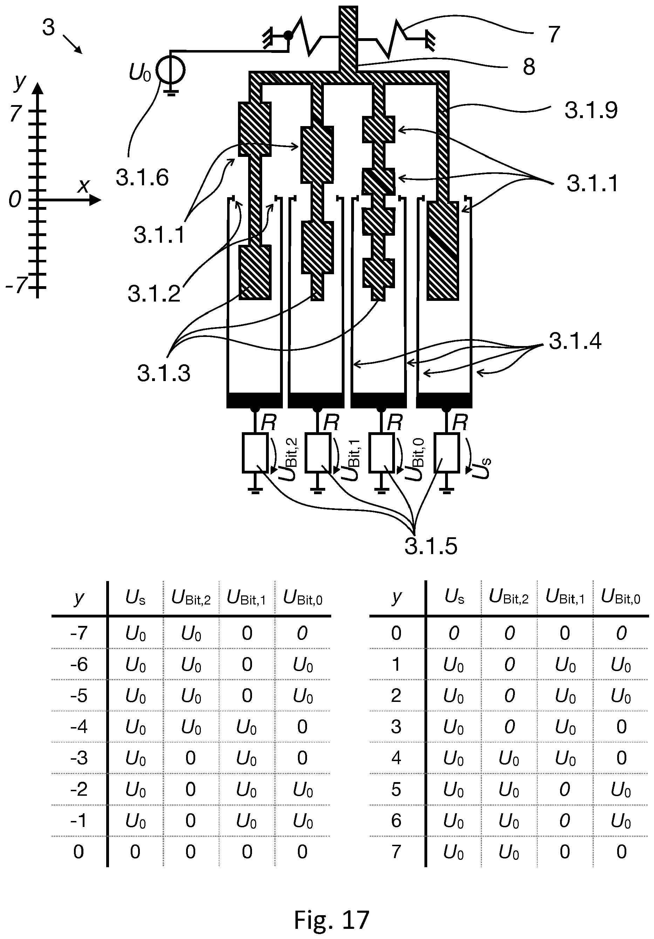

In einer bevorzugten Ausführungsform können die Fingerelektrodengruppen (3.1.3) entweder seriell am Läufer (8) oder auch in einer Kammstruktur angeordnet sein, wie Fig. 17 zeigt. Hier sind die Fingerelektrodengruppen (3.1.3) sowie die gestellfesten Gegenelektroden (3.1.2) parallel zur Läuferachse (y-Richtung) angeordnet. Die binäre Codierung über die Fingerelektroden ist in Fig. 17 exemplarisch in Form von Gray-Code realisiert, denkbar sind auch andere Formen der binären Codierung wie Dual-Code oder BCD-Code. Zur Codierung einer vorzeichenbehafteten Dehnung unter Berücksichtigung der Dehnungsrichtung wird in einer weiteren bevorzugten Ausführungsform ein zusätzliches Paar aus Finger- und Gegenelektroden als zusätzlicher Vorzeichenzweig (3.1.9) ergänzt. Die zur binären Codierung beitragenden Fingerelektroden werden dann durch eine zweite, spiegelsymmetrischen Anordnung der Fingerelektroden am Läufer erweitert, wie in Fig. 17 gezeigt. Fig. 17 zeigt anhand einer Tabelle auch die Spannungen die an den Pull-Down Widerständen idealerweise in Abhängigkeit der Läuferposition $y$ abfallen. Die parallel abgegriffenen Spannungen bilden ein diskretes elektrisches paralleles binäres Signal mit Gray-Codierung. Die Spannung $U_s$ gibt dabei das Vorzeichen der Dehnung bzw. der Verschiebung des Läufers in y-Richtung an.

Als Wandler können auch beispielsweise ein kapazitiver oder piezoresistiver Wandler genutzt werden.

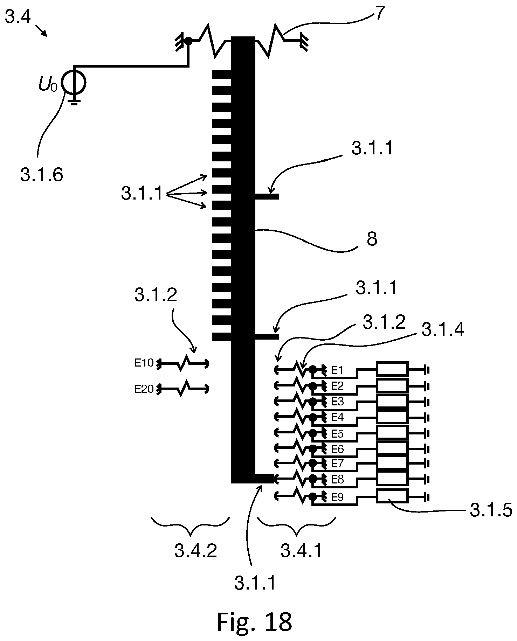

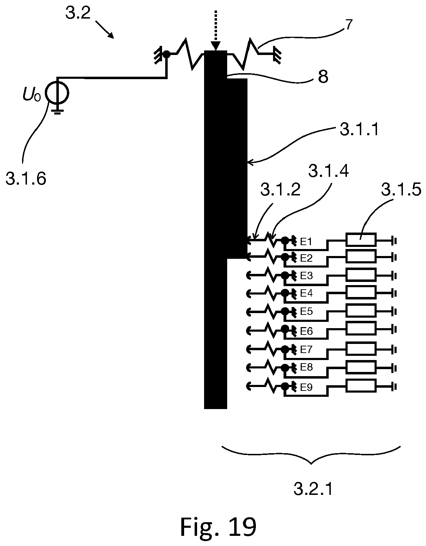

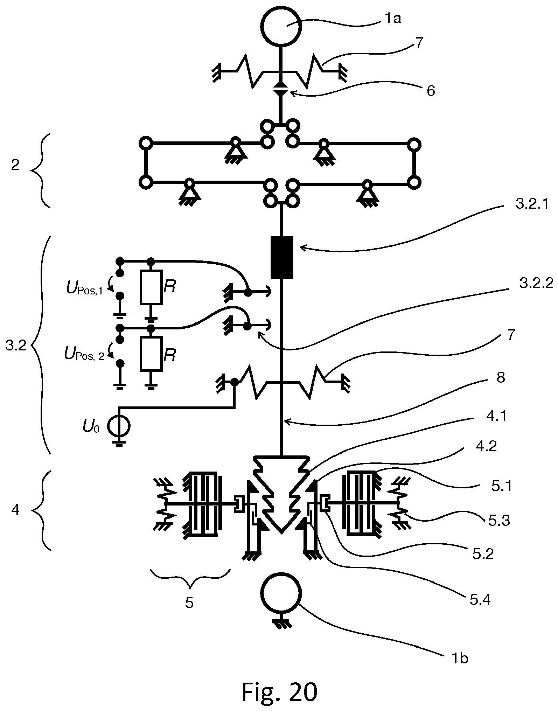

Neben einer direkten elektro-mechanischen Analog-Digital Wandlung ist auch eine binäre/digitale Positionserfassung mit Hilfe weiterer Übertragungsfunktionen möglich, die anstelle eines binär codierten Signals einen Thermometer-Code (z. B. 0001111) oder eine Dezimalzahl liefern. Hierzu wird die Codiereinheit des elektro-mechanischen Wandlers auf das entsprechende Zahlen- oder Codiersystem angepasst. Fig. 18 zeigt eine Ausführungsform für die Codierung einer Dezimalzahl, während Fig. 19 eine Ausführungsform für die Codierung von sogenanntem Thermometercode darstellt. Fig. 20 zeigt die Implementierung einer Codiereinheit zur Übertragung von Thermometercode im Gesamtsystem.

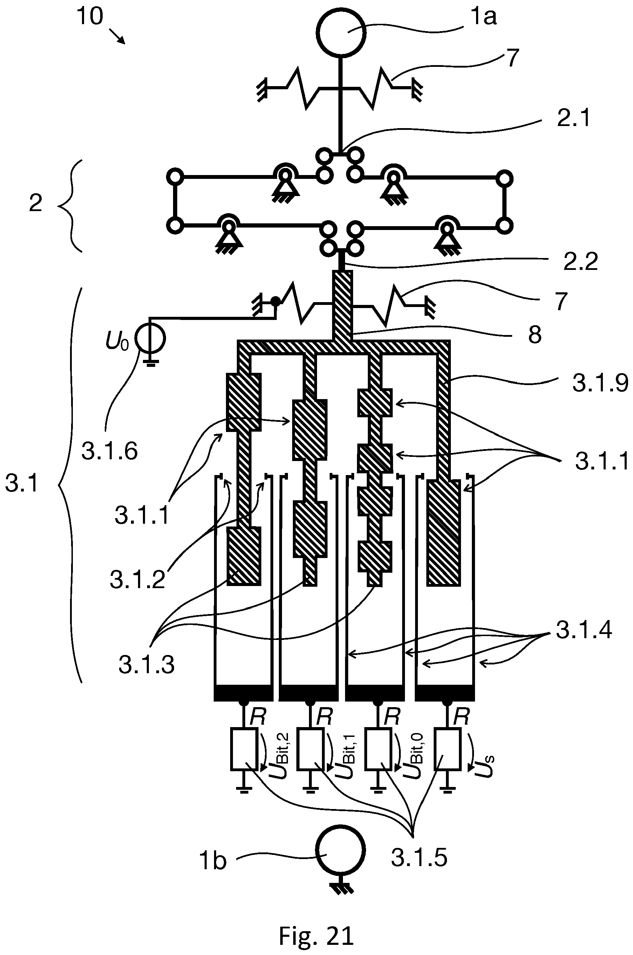

Fig. 21 zeigt ein weiteres Ausführungsbeispiel eines bi-direktionalen Dehnungssensors bei dem der elektro-mechanische Wandler eine Kammstruktur aufweist, einen Vorzeichenzweig (3.1.9) enthält und als binäre Codierung der Fingerelektrodengruppen (3.1.3) Gray-Code gewählt wurde.

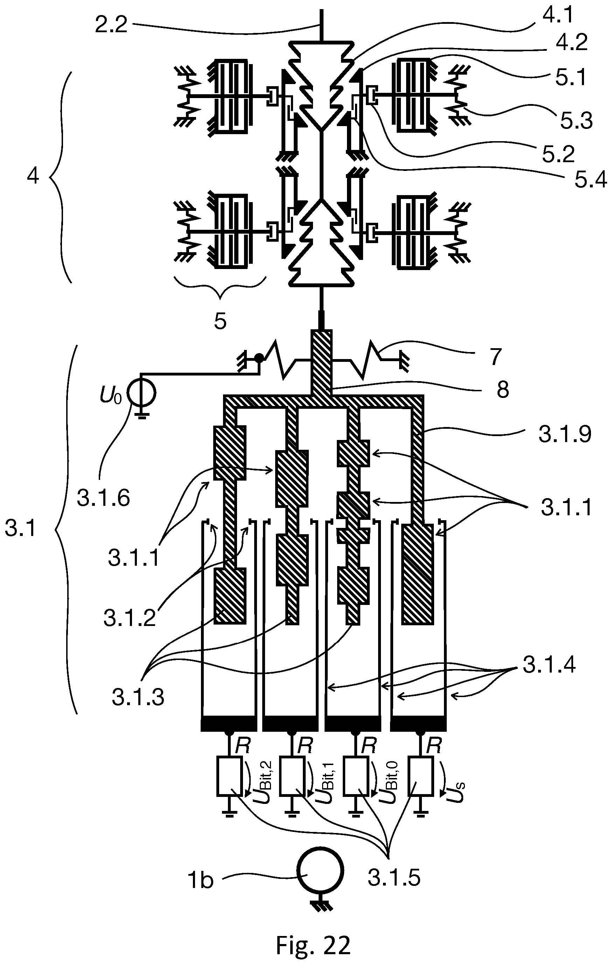

Fig. 22 zeigt eine weitere bevorzugte Ausführungsform des Signalwandlers (3) in Kombination mit einem mechanischen Maximalwertspeicher (4). Durch die Variation der Abstände und Breiten der Fingerelektroden (3.1.1) wird hier eine vordefinierte diskrete Übertragungsfunktion am mikromechanischen Analog-Digital Wandler (3.1) implementiert. Auch die Abstände der Rastzähne am mechanischen Maximalwertspeicher können dabei an die Abstände der Fingerelektroden (3.1.1) angepasst werden. Die Implementierung einer vordefinierten Übertragungsfunktion eignet sich z. B. zur Linearisierung und/ oder zur Anpassung des Messsensitivität über einen definierten Verschiebungs- und damit Messbereich. Fig. 22 zeigt zudem, dass die Reihenfolge von mikromechanischem Verstärker, elektromechanischem Signalwandler (3) im Aufbau variieren kann. Am Ausführungsbeispiel wird auch deutlich, dass der mechanische Maximalwertspeicher (4) auch für eine bi-direktionale Maximalwertspeicherung ausgeführt werden kann.

Ein besonderer Vorteil des elektro-mechanischen Wandlers in Form des mikromechanischen Analog-Digital Wandlers (3.1) besteht in der Diskretisierung und Digitalisierung einer Verschiebung in der mechanischen Domäne. Es werden keine weiteren aktiven elektrischen Bauelemente zur binären Codierung des Dehnungs- bzw. des Verschiebungssignals am Eingang des Wandlers benötigt. Durch die Möglichkeit einen geringen Abstand zwischen Finger- und Gegenelektroden einzustellen, wird die eigentliche Dehnungsmessung nur während der Auslesung des Wandlers (3.1) durch z.B. Reibung beeinflusst. Zudem werden für eine Signalauflösung von $n$ Bit nur eine Anzahl von $n$ Fingerelektrodengruppen (3.1.3) mit ggf. einem zusätzlichen Vorzeichenzweig (3.1.9) benötigt. Somit ist eine hohe Anzahl an Diskretisierungsschritten bei minimalem Platzbedarf möglich. Zudem lassen sich beliebige binäre Codes sowie beliebige Übertragungsfunktionen über die Anordnung und Größe der Fingerelektroden implementieren. Somit ist neben der passiven Digitalisierung auch bereits eine erste passive Datenaufbereitung durch Kennlinienanpassung über den Wandler möglich.

**Beispiel 4:** Mechanischer Maximalwertspeicher

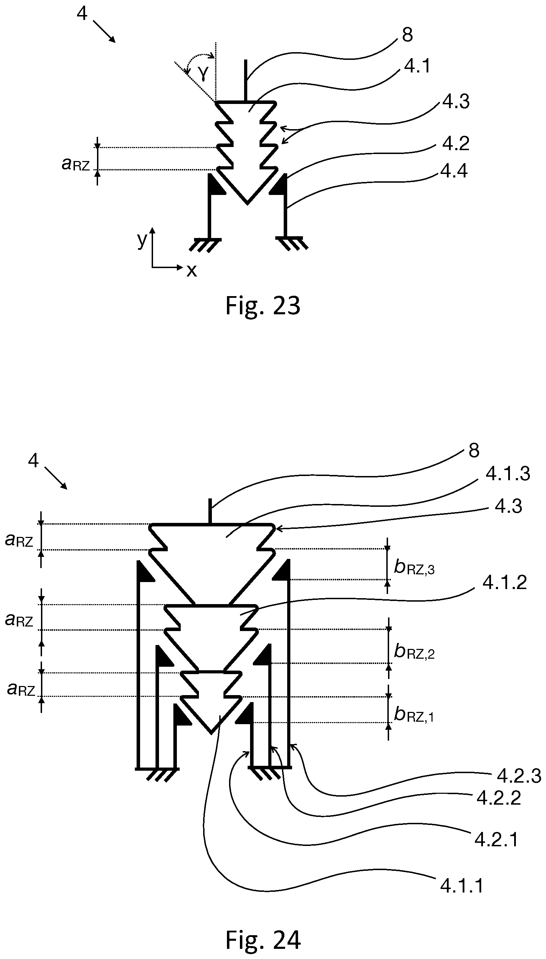

Fig. 23 zeigt eine bevorzugte Ausführungsform des mechanischen Maximalwertspeichers (4). Der mechanische Maximalwertspeicher (4) basiert auf einem Rastmechanismus bestehend aus Sperrklingen (4.2) und mindestens einem Rastelement (4.1) mit daran befindlichen Rastzähnen (4.3). Die Rastelemente sind dabei am Läufer (8) befestigt, während die Sperrklingen (4.2) gestellfest mit dem Substrat/Gestell des Dehnungssensors verbunden sind. Eine umgekehrte Anordnung ist ebenfalls möglich. Wird der Läufer (8) verschoben, so gleiten die am Läufer befindlichen Rastzähne (4.3) über die gestellfest, aber flexibel- und federgelagerten Sperrklingen. Dabei sind die Rastzähne so ausgelegt, dass die Rasten gegeneinander in eine Richtung (z.B. y-Richtung) gleiten, sich bei einer Bewegung in die entgegengesetzte Richtung jedoch ein Formschluss ausbildet, sodass die Rückwärtsbewegung gesperrt wird. Die formschlüssige Verbindung erlaubt keine Rückkehr des Läufers (8) zu seiner initialen Position, sodass der erreichte Maximalwert der Läuferauslenkung gespeichert wird.

Die Größe der Rastzähne sowie deren Abstände ($a_{RZ}$) werden bei dieser Anordnung maßgeblich über die Auflösung der Lithografie während der Fertigung bestimmt. Je genauer die Fertigung, desto geringer lässt sich der Abstand $a_{RZ}$ umsetzen und desto geringer ist auch die Schrittweite $y_s$ zwischen den einzelnen Diskretisierungsschritten. Ferner wird der Reibwinkel $\gamma$ an den Rastzähnen durch den Haftreibkoeffizienten zwischen den aneinander gleitenden Oberflächen limitiert. Durch den Abstand der einzelnen Rastzähne $a_{RZ}$ wird die minimale Schrittweite $y_s$ der diskretisierten Positionserfassung bestimmt. So gilt für die minimale Schrittweite $y_s$ von Rastposition zu Rastposition:

$$y_S \geq a_{RZ}$$

Um der Limitierung der minimalen Schrittweite $y_s$ entgegenzuwirken, kann der mechanische Speicher um zusätzliche Rastmechanismen-Paare bestehend aus Rastelementen und Sperrklingen ergänzt werden, wie in Fig. 24 gezeigt wird. Der Abstand $a_{RZ}$ der einzelnen Rastzähne (4.3) kann dabei für jedes zusätzliche Rastelement (4.1) identisch sein, kann jedoch auch variieren. Auch hier werden die Größe und der Abstand der Rastzähne zueinander maßgeblich durch die Auflösung der Lithografie begrenzt. Eine geringere Schrittweite $y_s$ kann jedoch dadurch erreicht werden, dass mit jeder zusätzlichen Paarung ein definierter Versatz der Rastzahn-Position umgesetzt wird. So kann für jede weitere Paarung der initiale Abstand $b_{RZ,i}$ zwischen dem jeweils ersten Rastzahn eines $i$-ten Rastelements und der zugehörigen $i$-ten Sperrklinge in Bezug auf eine weitere Paarung variieren.

Werden insgesamt $n$ Paare bestehend aus je einem Rastelement und mindestens einer Sperrklinge vorgesehen, so gilt für den initialen Abstand $b_{RZ,i}$ zwischen Sperrklinge und erstem Rastzahn des $i$-ten Rastelements:

$$b_{RZ,i} = a_{RZ} + (i - 1)\frac{a_{RZ}}{n} + a_{offset}$$

Dabei ist $a_{offset}$ ein fertigungsbedingter Offset, der für alle $n$ Paare identisch sein sollte.

Ist die Anzahl der Rastzähne $k$ pro Rastelement für alle $n$ Rastelemente identisch, so gilt für die Anzahl der speicherbaren Positionen $z$:

$$z = k \cdot n + 1$$

Inklusive der ersten initialen Position des Läufers können folglich insgesamt $z$ Positionszustände gespeichert werden. Die minimale Schrittweite $y_s$ beträgt dann:

$$y_S = \frac{a_{RS}}{n}$$

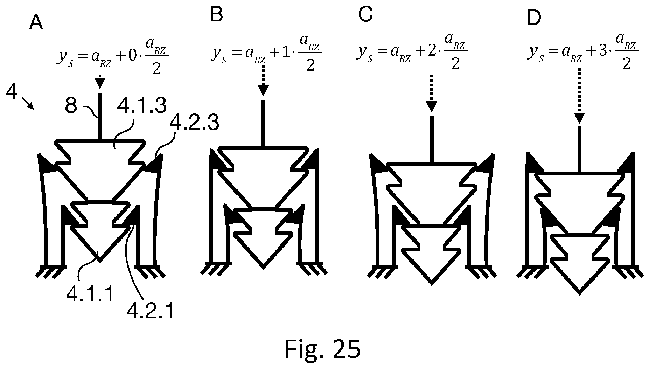

Fig. 25 zeigt eine Ausführungsform eines symmetrischen mechanischen Maximalwertspeichers mit insgesamt zwei Rastelementen ($n$=2) die je über zwei Rastzähne ($k$=2) auf jeder Seite verfügen. Insgesamt können hiermit also fünf Positionen ($z$=5) inklusive der initialen nicht-ausgelenkten Position gespeichert werden. Die minimale Schrittweite beträgt $y_S = \frac{a_{RS}}{2}$ .

Die Größe der Rastzähne sowie deren Abstände werden maßgeblich über die Auflösung der Lithografie bestimmt. Ferner wird der Reibwinkel an den Rastzähnen durch den Haftreibkoeffizienten zwischen den aneinander gleitenden Oberflächen limitiert. Da der Abstand der Rastzähne die Schrittweite $a_{RZ}$ der diskreten Schritte und damit die Auflösung des Speichers limitiert, können weitere Rastmechanismen im System ergänzt werden, die jedoch um $a_{RZ}/n$ versetzt sind. Auf diese Weise können die Rastzähne auch Zwischenpositionen unabhängig von der lithografischen Auflösung einnehmen.

Fig. 24 zeigt einen Rastmechanismus, bei dem die minimale lithografie-bedingte Schrittweite $a_{RZ}$ über einen zweiten um $a_{RZ}/3$ versetzten Rastmechanismus und einen um 2 $a_{RZ}/3$ gedrittelt wird. Der dargestellte Rastmechanismus kann so sechs feste Positionen im Abstand von $a_{RZ}/3$ einnehmen, wobei für die erste Position aus der initialen Lage eine Verschiebung des Läufers um $a_{RZ}$ notwendig ist.

Der rastzahnbasierte Maximalwertspeicher (4) erlaubt das Speichern von Verschiebungssignalen in diskreten Schrittweiten $y_S$. Ein Verschiebungssignal wird aber nur dann gespeichert, wenn die eingehende Verschiebung größer ist als die minimale Schrittweite $y_S$ des Speichers, da nur dann ein Einrasten an der nächsthöheren Rastzahnposition ermöglicht wird. Durch die Ausführung des Maximalwertspeichers in kaskadierter Form, bei der der Abstand zwischen Sperrklingen (4.2) und Rastzähnen (4.3) in Bezug auf die vorherige Paarung an Sperrklingen und Rastzähnen versetzt angeordnet ist, entsteht der Vorteil, dass die Schrittweite der diskreten Rastpositionen $y_S$ kleiner ist als der Mindestabstand $a_{RZ}$ zwischen zwei aufeinanderfolgenden Rastzähnen (4.3) desselben Rastelements (4.1). Somit können auch Verschiebungssignale gespeichert werden, die kleiner sind als der Abstand zwischen zwei Rastzähnen $a_{RZ}$.

Durch eine weitere Kombination des rastzahnbasierten mechanischem Maximalwertspeicher (4) mit dem mechanischen Verstärker (2) ergibt sich der Vorteil und Effekt, dass auch noch geringere Verschiebungssignale, die viel kleiner sind als die minimale Schrittweite des Maximalwertspeichers $y_S$ gespeichert werden können. So können über Maximalwertspeicher mit Schrittweiten im Mikrometerbereich auch Verschiebungen im Nanometerbereich gespeichert werden.

Durch die zusätzliche Kombination mit einem elektromechanischen Signalwandler (3) kann die mechanisch gespeicherte Verschiebung zu einem beliebigen Zeitpunkt elektrisch ausgelesen werden. Das Messen und Speichern einer Verschiebung kann so zu einem anderen Zeitpunkt erfolgen als das elektrische Auslesen des mechanischen Speichers. Somit ist auch eine energieautarke Messung und Speicherung möglich, bei der zum Messen und Speichern keine elektrische Energie erforderlich ist und der Speicher aber trotzdem zu einem späteren Zeitpunkt elektrisch ausgelesen werden kann.

Durch die zusätzliche Kombination des mechanischen Maximalwertspeichers (4) und des mechanischen Verstärkers (2) mit einer Kupplung (6) ergibt sich der Vorteil und Effekt, dass der mechanische Maximalwertspeicher vom eingeleiteten Verschiebungssignal und damit von äu-ßeren Kräften entkoppelt werden kann. Der mechanische Maximalwertspeicher (4) wird somit vor einem gewaltsamen Herausreissen der Rastverbindungen durch äußere Kräfte geschützt.

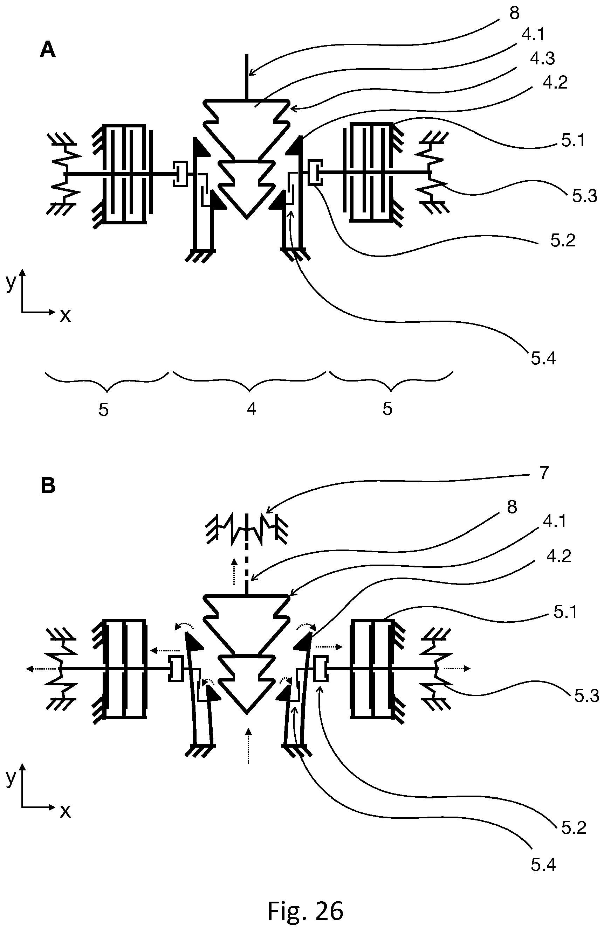

Zum Zurücksetzen des mechanischen Maximalwertspeichers müssen die Sperrklingen (4.2) von den Rastzähnen (4.3) gelöst werden. Hierzu können verschiedene konventionelle Aktoren der Mikrosystemtechnik eingesetzt werden. In Fig 26A wird hierzu ein bevorzugter Rückstellmechanismus (5) basierend auf elektrostatischen Aktoren (5.1) gezeigt. Mögliche Ausführungsformen umfassen aber auch thermische Aktoren, die eine besonders hohe Kraft aufbringen können und dabei geringen Platzbedarf auf dem Chip benötigen. Fig. 26B zeigt, wie der Rückstellmechanismus den Kontakt zwischen Sperrklingen (4.2) und Rastzähnen (4.3) löst.

Der Rückstellmechanismus ist über eine Rückstellkupplung (5.2) mit dem Rastmechanismus bzw. den Sperrklingen verbunden. Die Rückstellkupplung hat die Aufgabe, die Bewegungen der Sperrklingen, die beim Speichervorgang auftreten, von dem Rückstellmechanismus unidirektional zu entkoppeln, jedoch gleichzeitig die Verschiebungs- und Kraftaufwendungen des Aktors an den Rastmechanismus insbesondere an die Sperrklingen weiterzuleiten, um die Sperrklingen von den Rastzähnen zu lösen. Ferner sorgen Überträger (5.4) für die Verteilung der Kraft- und Verschiebungsübertragung vom Aktor auf alle zu lösenden Sperrklingen (4.2).

**Beispiel 5:** Kupplung

Der mechanische Maximalwertspeicher kann auch in Verbindung mit einer Kupplung (6) ausgebildet werden. Wird der erreichte Maximalwert durch den Rastmechanismus gespeichert, so ist der Läufer (8) dauerhaft ausgelenkt. Entspannt sich dann jedoch das zu überwachende Bauelement oder wird dieses in die entgegengesetzte Richtung beansprucht, so wirkt auf den Läufer (8) und damit auch an den Rastzähnen eine hohe Kraft, die den Mechanismus zerstören könnte. Aus diesem Grund kann der Maximalwertspeicher (4) mechanisch vom Verbindungselement (1a, 1b) über eine Kupplung (6) entkoppelt werden.

Im einfachsten Fall kann die Kupplung aus zwei gegenüberliegenden, mechanisch getrennten Stößeln bestehen, wie in Fig. 27 gezeigt. Einer der Stößel (6.1) ist dabei unmittelbar am Verbindungselement angebracht, während der zugehörige zweite Stößel (6.2) am Eingang des mechanischen Verstärkers platziert ist. Verschiebungen des Verbindungselements in negative y-Richtung werden dabei über den ersten Stößel an den zweiten Stößel übertragen. Wird das Verbindungselement jedoch in die andere Richtung ausgelenkt, so hat dies keine Auswirkungen auf den zweiten Stößel und damit auf den restlichen Mechanismus.

**Beispiel 6:** Erweiterung des mikromechanischen Messsystems zur energieautarken Erfassung, Speicherung und Digitalisierung weiterer physikalischer Größen

Das mikromechanische Messsystem kann alternativ oder in Ergänzung zur Dehnungsmessung auch zur energieautarken Messung weiterer physikalischer Größen genutzt werden. Vorzugsweise wird dazu das flexibel gelagerte Verbindungselement (1a) nicht direkt mit einem zu Dehnenden Prüfobjekt (12) verbunden, sondern alternativ mit einem mechanischen Eingangswandler (16), der dazu ausgeführt ist eine zu messende physikalische Größe in eine Verschiebungs- oder Dehnungsgröße zu wandeln die wiederum eine relative Verschiebung zwischen gestellfestem (1b) und flexiblen Verbindungselemente (1a) hervorruft. Fig. 28 zeigt eine mögliche Anordnung der einzelnen Komponenten am mikromechanischen Messsystem. Zur Einschränkung von Funktionen ist eine Vertauschung oder Entfernung einzelner Komponenten denkbar. Dies gilt auch für die reine Dehnungsmessung.

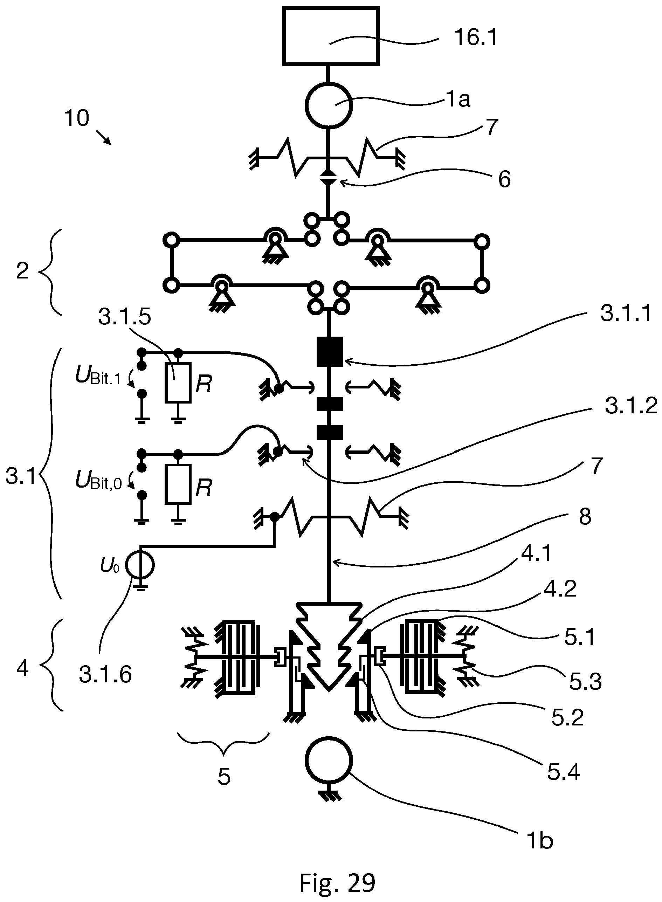

Fig. 29 zeigt beispielhaft eine bevorzugte Ausführungsform des mikromechanischen Messsystems bei dem das flexibel gelagerte Verbindungselement (1a) mit einer seismischen Masse (16.1) verbunden ist, die als mechanischer Eingangswandler (16) zur Messung einer Beschleunigung dient.

Neben des gezeigten Beispiels für die Montage, Anordnung und Ausführung mechanischer Eingangswandler (16) am mikromechanischen Messsystem sind auch weitere Ausführungsformen des mechanischen Eingangswandlers (16) für alternative physikalische Messgrößen wie beispielsweise Temperatur, Strom, Spannung, Feuchtigkeit, elektrische oder magnetische Feldstärken denkbar. Insbesondere zur Erfassung von Feldgrößen ist die Nutzung magnetischer, dielektrische Materialien oder Elektret am flexibel gelagerten Verbindungselement (1a) als mechanischer Eingangswandler (16) denkbar. Zur Erfassung von Strom und Spannung kommen aus dem Stand der Technik bekannte elektrostatische oder elektrothermische Aktoren der Mikrosystemtechnik in Frage. Zur Erfassung von Temperaturen können Bi-Morphe oder Aktoren aus Formgedächtnislegierung zwischen flexibel gelagerten Verbindungselement und Gestell implementiert werden.

**Beispiel 7:** Herstellung des mikromechanischen Messsystems

Das technische Prinzip des Dehnungsmesssystems lässt sich mit verschiedenen Technologien umsetzen, insbesondere mit Prozessen der Mikrosystemtechnik.

Besonders geeignet ist die technologische Umsetzung auf Basis eines SOI-Substrates ("Siliconon-Insulator"). Diese Substrate umfassen drei Schichten: einen sog. "Devicelayer", bestehend aus oder enthaltend einkristallines Silicium (15.1), einen "Buried Oxide Layer" (BOX-Layer) aus $SiO_2$ (15.2) und eine weitere Schicht bestehend aus oder enthaltend einkristallinem Silicium, dem "Handellayer" (15.3).

Der Devicelayer (15.1) trägt die frei beweglichen, zweidimensionalen mechanischen Strukturen wie beispielsweise den mechanischen Verstärker (2) oder den Maximalwertspeicher (4), während der Handlelayer (15.3) als mechanisches Gestell verstanden werden kann, der über die $SiO_2$-Schicht des BOX-Layers (15.2) mit den mechanischen Strukturen des Devicelayers an fest definierten Stellen verbunden ist. Der BOX-Layer (15.2) bildet dabei eine Opferschicht, die unterhalb der frei beweglichen Strukturen partiell entfernt wird.

Zur Fertigung des Dehnungsmesssystems (10) wird sowohl der Devicelayer (15.1) als auch der Handlelayer (15.3) strukturiert. Im Devicelayer (15.1) werden die gesamten mechanischen und elektromechanischen Komponenten realisiert, während am Handlelayer (15.3) die Verbindungselemente (1a, 1b) vorgesehen sind, die den Sensor mit einem Messobjekt (12) oder einem flexiblen Gehäuse (11) verbinden. Alternativ können die Verbindungselemente auch am Devicelayer angebracht sein. Handle- und Devicelayer sind über den BOX-Layer (15.2) verbunden, so dass die mechanische Verschiebung an den Verbindungselementen auf den Devicelayer übertragen werden kann. In Fig. 30A wird der Schichtaufbau des Systems einschließlich der Elektroden (15.4) sowie dem Verbindungsmaterial zur formschlüssigen Verbindung (15.5) dargestellt. Fig. 30B zeigt einen alternativen Schichtaufbau, bei dem der Handlelayer (15.3) nicht strukturiert ist, sondern der Devicelayer (15.1) direkt mit dem flexiblen Gehäuse (11) über das Verbindungsmaterial (15.5) verbunden ist.

Fig. 30C zeigt eine weitere mögliche Anordnung bei der der Devicelayer direkt über die Verbindungselemente (1a, 1b, ggf. 1c, 1d) mit dem flexiblen Gehäuse verbunden ist. Damit sich die frei beweglichen Strukturen am Devicelayer, wie beispielsweise der mechanische Verstärker (2) oder der elektromechanische Wandler (3) frei bewegen können, weist das flexible Gehäuse (11) eine Kavität im Bereich der frei beweglichen Komponenten auf. Eine stoffschlüssige Verbindung zwischen der Verbindungselemente (1a, 1b) und dem flexiblen Gehäuse ist hier auch ohne Verbindungsmaterial beispielsweise über Anodisches-, Eutektisches-, oder Fusionsbonden möglich, sofern ein geeignetes Material, wie beispielsweise Glas oder Silicium als Substrat für das flexible Gehäuse (11) genutzt wird. Zur stoffschlüssigen Verbindung zwischen dem flexiblen Gehäuse (11) und dem Mess- oder Prüfobjekt (12) wird als Verbindungsmaterial (15.5) in einer bevorzugten Ausführungsform ein Lot, ein Klebstoff und/ oder ein Schichtstapel reaktiver Metallschichten (z.B. aus Al/Ni, Si/Zr, Ni/Ti) auf dem flexiblen Gehäuse abgeschieden und strukturiert. Die Nutzung strukturierter reaktiver Metallschichten erlaubt ein stoffschlüssiges Fügen der Messvorrichtung mit dem flexiblen Gehäuse an einem Messobjekt durch lokales und oberflächiges Verschweißen/ Löten durch eine stark exotherme Legierungsbildung der gestapelten Metallschichten nach Überschreiten einer zur Reaktion notwendigen Aktivierungsenergie durch beispielsweise einen Laserimpuls oder einen Zündfunken.

Der genaue Fertigungsablauf kann variieren. Ein grundsätzlicher Prozessablauf wird in Fig. 31 gezeigt und beispielhaft im Folgenden erläutert.

**EP 4 354 082 A2**

Ausgangspunkt für den Fertigungsablauf ist ein SOI Substrat bzw. ein Substrat bestehend aus drei Ebenen wobei die mittlere Ebene (15.2) eine Opferschicht darstellt, die Devicelayer Ebene (15.1) die Funktionsschicht und die Handlelayer Ebene (15.3) die Aufgabe des mechanischen Gestells (13) übernimmt (Fig. 31A). Zunächst wird auf dem Devicelayer (15.1) des Wafers zur elektrischen Kontaktierung eine Metallschicht, z.B. aus Aluminium, abgeschieden (Fig. 31B). Anschließend wird eine Fotolithografie durchgeführt, bei der die gewünschte Geometrie auf dem Devicelayer abgebildet wird. Durch einen weiteren Ätzschritt wird die zuvor abgeschiedene Metallschicht partiell entfernt und die Schicht somit strukturiert. Der verbleibende Fotoresist am Handlelayer wird dann entfernt. Alternativ ist auch eine Strukturierung der Elektroden über ein Lift-off Verfahren möglich.

Damit beim Fügen des Sensors mit einem Messobjekt durch z.B. Löten nur die definierten Verbindungsstellen mit Lot benetzt werden und nicht etwa der gesamte Chip, werden die Oberflächen der Verbindungselemente (1a, 1b) zusätzlich modifiziert, wie z.B. durch Abscheidung eines Verbundmaterials (15.5) (Fig. 31B). Durch einen zweiten Lithografie-Schritt und anschließendem Abscheiden eines Haftvermittlers oder Edelmetalls oder eines reaktiven Schichtstapels aus z.B. Ni/Al werden über einen Lift-off Prozess die Verbindungsoberflächen am Handlelayer oder am Devicelayer leicht modifiziert.

Auf der Vorderseite des SOI-Wafers, also auf dem Devicelayer (15.1), wird über einen weiteren Lithografie-Prozess die Geometrie der mechanischen Komponenten des Sensors (Verstärker, ggfs. Maximalwertspeicher, ggfs. elektromechanischer Wandler, etc.) auf den Devicelayer (15.1) projiziert. Der Devicelayer (15.1) wird anschließend über reaktives Ionentiefätzen ("DRIE"-Prozess) durchgehend bis zur nächsten Schicht tiefgeätzt (Fig. 31C). Anschließend werden die Strukturen am Handlelayer bis zur Oxidschicht durchgeätzt (Fig. 31D). Zur besseren elektrischen Kontaktierung der Kontaktelektroden des elektromechanischen Wandlers können zusätzlich weitere Metallschichten an den tiefgeätzten Flanken des Devicelayer abgeschieden werden. Durch Ionenstrahlätzen können diese Metallschichten weiterhin strukturiert werden. Die Silicium-Strukturen sind bis zu dieser Stelle noch nicht frei beweglich. Zur Freistellung wird nun ein Flusssäure-Dampf oder HF-Gas (HF-Dampf)-Prozess durchgeführt, bei dem die $SiO_2$-Schicht zwischen Handle- und Devicelayer teilweise entfernt wird (Fig. 31E). Flusssäure unterätzt dabei nur diejenigen Strukturen am Devicelayer, die ausreichend schmal sind und viel Angriffsoberfläche bieten. Breite Strukturen werden langsamer unterätzt und sind daher über das $SiO_2$ immer noch gestellfest mit dem Handlelayer verbunden.

Fig. 32 zeigt einen alternativen Fertigungsablauf zur Fertigung des mikromechanischen Messsystems sowie die Montage des Messsystems auf einem flexiblen Gehäuse (11). Fig. 32A zeigt zunächst die Bereitstellung eines SOI-Substrats (15.1, 15.2, 15.3). In Fig. 32B wird die Abscheidung und Strukturierung einer Metallschicht (15.4) gezeigt die für die elektrischen Anschlüsse benötigt wird. Nach der Strukturierung des Devicelayers (15.1) über Fotolithografie und anisotropes Ätzen (Fig. 32C) werden die beweglichen Strukturen des mikromechanischen Messsystems über Flusssäure freigestellt (Fig. 32D). Fig. 32E zeigt ferner die Bereitstellung eines Substrats (15.7) für das flexible Gehäuse. Bevorzugt handelt es sich bei diesem Substrat um Glas, Glaskeramik, Keramik oder ebenfalls Silicium. Auf dem Substrat (15.7) wird zudem eine Metallschicht zum Herausführen von Elektroden (15.6) abgeschieden und strukturiert (Fig. 32F). Ferner wird wie in Fig. 32G gezeigt das Substrat (15.7) des flexiblen Gehäuses über Lithografie und Ätzen noch in der Art strukturiert, dass am Substrat Kavitäten erzeugt werden. Das SOI-Substrat und das Substrat des flexiblen Gehäuses wird in Fig. 32H an den Stellen der Verbindungselemente (1a, 1b, ggf. 1c, 1d) über einen Bondprozess gefügt. Weitere Verbindungen zur hermetischen Abdichtung sind ebenfalls möglich. Weiterhin können nun wie in Fig. 32I angedeutet Verbindungsmaterialien (15.5) wie reaktive Metallschichten, Lot oder Klebstoff flächig oder strukturiert auf der Oberfläche des flexiblen Gehäuses abgeschieden werden.

Alternativ zur Fertigung über ein SOI-Substrat ist auch die Fertigung mit Hilfe eines mehrschichtigen Aufbaus von Keramik- oder Metall-Schichten denkbar. Dabei werden die für die Funktion notwendigen Funktionsschichten (gestellfeste Ebene - Handlelayer, Ebene für frei bewegliche Elemente - Devicelayer) anstelle von Silicium durch eine Keramik oder Metallschicht umgesetzt. Auf diese Weise können Materialien verwendet werden, deren thermischer Längenausdehnungskoeffizient zum Ausdehnungskoeffizienten des Messobjektes passen. Alternativ können Materialien wie die Glaskeramiken (z.B. Zerodur) mit besonders niedrigen thermischen Ausdehnungskoeffizienten verwendet werden.

**Literatur**

Chen, C. et al. Femtosecond Laser-Inscribed High-Order Bragg Gratings in Large-Diameter Sapphire Fibers for High-Temperature and Strain Sensing. 2018, Journal of Lightwave Technology.

Gerlach, G. und W. Dötzel, Einführung in die Mikrosystemtechnik ein Kursbuch für Studierende 2006, München [u.a.]: Fachbuchverl. Leipzig im Carl Hanser Verl. 384 S.

Schomburg, W.K., Introduction to Microsystem Design. 2011, Springer.

Tian, Q. H., Yan, L. P., Yang, T., und Chen, B. Y. 2012, Recent Developments of Material Deformation Measurement. In Applied Mechanics and Materials (Vol. 117, pp. 122-128), Trans Tech Publications

Tietze, U., C. Schenk, und E. Gamm, Halbleiter-Schaltungstechnik. 2012, Springer-Verlag

VDI/VDE 2635 Blatt 1; Experimentelle Strukturanalyse Dehnungsmessstreifen mit metallischem Messgitter Kenngrößen und Prüfbedingungen; Juli 2015

VDI/VDE 2635 Blatt 2; Experimentelle Strukturanalyse Empfehlung zur Durchführung von Dehnungsmessungen bei hohen Temperaturen; Februar 2015

**Bezugszeichenliste**

| | |
|---|---|
| 1a: | flexibel gelagertes Verbindungselement |
| 1b: | gestellfest gelagertes Verbindungselement |
| 1c: | Verbindungselement für Kompensationsmechanismus |
| 1d: | Verbindungselement für Kompensationsmechanismus |
| 2: | mechanischer Verstärker |
| 2.1: | Verstärkereingang |
| 2.2: | Verstärkerausgang |
| 2.3.1: | Hebel |
| 2.3.2: | Hebelverbinder |
| 2.3.3: | Schubgelenk |
| 2.3.4: | Kurvenschreibe |
| 2.3.5: | Drehgelenk |
| 2.3.6: | gestellfestes Drehgelenk |
| 2.4: | Erste Hebelpaarung |
| 2.5: | $j$-te Hebelpaarung |
| 2.6: | $m$-te Hebelpaarung (hinterste Hebelpaarung in der seriellen Anordnung an Hebelpaarungen) |
| 3: | elektro-mechanischer Wandler |
| 3.1: | mikromechanischer Analog-Digital Wandler |
| 3.2: | mikromechanische Positionsschalter |
| 3.3: | kapazitiver Wandler |
| 3.4: | kontaktbasierter mikromechanischer A/D Wandler mit Dezimalkodierung |
| 3.1.1: | Fingerelektroden montiert an Läufer |
| 3.1.2: | Gegenelektroden (gestellfest) |
| 3.1.3: | Fingerelektrodengruppen |
| 3.1.4: | Federaufhängung Gegenelektrode |
| 3.1.5: | Pull-down/Pull-up Widerstand |
| 3.1.6: | Spannungsquelle oder Spannungsanschluss |
| 3.1.7: | Spannungsabgriff an Bit 0 |
| 3.1.8: | Spannungsabgriff an Bit 1 |
| 3.1.9: | Vorzeichenzweig zur Codierung der Dehnungsrichtung |
| 3.3.1: | gestellfeste Elektroden |
| 3.3.2: | bewegliche Elektroden |
| 3.4.1: | Kodiereinheit zur Kodierung der Dezimalstellen $10^0$ |
| 3.4.2: | Kodiereinheit zur Kodierung der Dezimalstellen $10^1$ |
| 4: | mechanischer Maximalwertspeicher |
| 4.1: | Rastelemente |
| 4.1.1: | erste Rastelement mit $k$ Rastzähnen (Ausführungsbeispiel) |
| 4.1.2: | (n-1)-tes Rastelement mit z.B. $k$ Rastzähnen (Ausführungsbeispiel) |
| 4.1.3: | n-tes Rastelement mit z.B. $k$ Rastzähnen |
| 4.2: | Sperrklingen |
| 4.2.1: | erste Sperrklinge zugehörig zu erstem Rastelement |

4.2.2: (n-1)-te Sperrklinge zugehörig zu (n-1)-tem Rastelement

4.2.3: *n*-te Sperrklinge zugehörig zu *n*-tem Rastelement

4.3: Einzelner Rastzahn an Rastelement

5: Rückstellmechanismus

5.1: elektrostatischer Aktor

5.2: Rückstellkupplung

5.3: Führungsfeder Rückstellmechanismus

5.4: Überträger (Rückstellmechanismus)

6: Kupplung

6.1: erster Stößel

6.2: zweiter Stößel

7: Führungsfedern

8: Läufer

10: Dehnungssensor

11: flexibles Gehäuse

12: Prüfobjekt, Prüfkörper, Messobjekt

13: Substrat/ Gestell des Dehnungssensors

14: Bondelektroden

15.1: Substratebene beinhaltend den mechanischen Aufbau, Devicelayer (vorzugsweise Silicium)

15.2: Substratebene beinhaltend eine Opferschicht, BOX-Layer (vorzugsweise $SiO_2$)

15.3: Substratebene beinhaltend das mechanische Gestell, Handlelayer (vorzugsweise Silicium)

15.4: Elektrodenmaterial (vorzugsweise Aluminium, Titan, Nickel, Chrom oder Gold)

15.5: Verbindungsmaterial zum stoffschlüssigen Verbund zwischen Dehnungssensor und Messobjekt (vorzugsweise Klebstoff, Lot, reaktive Metallschichten)

15.6: Vom Dehnungssensor auf das Gehäuse herausgeführte Elektroden

15.7: Substrat des flexiblen Gehäuses (vorzugsweise Glas, Glaskeramik, Keramik, Silicium)

16: mechanischer Eingangswandler

16.1: seismische Prüfmasse

17: Kompensationsmechanismus

17.1: Krafttransformator, Feder

17.2: Umlenkmechanismus

**Patentansprüche**

1. Mikromechanische Vorrichtung zur energieautarken Messung und Speicherung eines mechanischen Verschiebungssignals, umfassend einen mechanischen Verstärker (2) zur Signalverstärkung und einen mechanischen Maximalwertspeicher (4) zur Speicherung der erreichten mechanischen Verschiebung, wobei der mechanische Maximalwertspeicher (4) rastzahnbasiert ist.

2. Mikromechanische Vorrichtung gemäß Anspruch 1, wobei der mechanische Maximalwertspeicher (4) mindestens einen Läufer (8) sowie mindestens eine Paarung aus n Sperrklingen (4.2) und *n* Rastelementen (4.1) mit daran befindlichen *k* Rastzähnen (4.3) umfasst, wobei der geringste Abstand zwischen den Rastzähnen (4.3) vorzugsweise $a_{RZ}$ beträgt.

3. Mikromechanische Vorrichtung gemäß Anspruch 2, wobei der mechanische Maximalwertspeicher (4) dazu ausgebildet ist, dass bei translatorischer Verschiebung des Läufers (8) die Sperrklingen und Rastzähne einen Formschluss bilden und die Verschiebung blockiert wird und so diskrete Rastpositionen mit einer Schrittweite $y_s$ des Läufers erreicht werden.

4. Mikromechanische Vorrichtung gemäß Anspruch 3, **dadurch gekennzeichnet, dass** bei mehreren Paarungen aus Sperrklingen (4.2) und Rastelementen (4.1) der Abstand zwischen Sperrklingen (4.2) und Rastzähnen (4.3) in Bezug auf die vorherige Paarung versetzt angeordnet ist, sodass der Abstand der diskreten Rastpositionen $y_s$ des Läufers (8) kleiner ist als der Mindestabstand $a_{RZ}$ zwischen zwei aufeinanderfolgender Rastzähne (4.3) desselben Rastelements (4.1).

5. Mikromechanische Vorrichtung gemäß Anspruch 4, wobei insgesamt *n* Paare bestehend aus je einem Rastelement (4.1) und mindestens einer Sperrklinge (4.2) kaskadiert am Läufer (8) angeordnet sind und der Versatz zwischen der i-ten Sperrklinge zum i-ten Rastelement in Bezug zur vorherigen Paarung $a_{RZ}/n$ beträgt und die minimale Schrittweite zwischen zwei diskreten Rastpositionen ebenso $a_{RZ}/n$ beträgt.

6. Mikromechanische Vorrichtung gemäß einem der Ansprüche 1 - 5, weiterhin umfassend mindestens einen elektromechanischen Signalwandler (3) zur Wandlung der verstärkten mechanischen Verschiebung in ein elektrisches analoges oder digitales Signal.

7. Mikromechanische Vorrichtung gemäß Anspruch 6, wobei es sich bei dem elektromechanischen Signalwandler (3) um einen kapazitiven Wandler (3.3) handelt.

8. Mikromechanische Vorrichtung gemäß einem der Ansprüche 1 - 7, weiterhin umfassend eine Kupplung (6), die dazu ausgebildet ist, den Läufer (8) mechanisch von äußeren Kräften zu trennen.

9. Mikromechanische Vorrichtung gemäß einem der Ansprüche 1 - 8, weiterhin umfassend einen Rückstellmechanismus (5) zum Löschen des mechanischen Maximalwertspeichers, vorzugsweise wobei besagter Rückstellmechanismus (5) auf mindestens einem elektrostatischen Aktor (5.1) basiert.

10. Mikromechanische Vorrichtung gemäß Anspruch 9, wobei besagter Rückstellmechanismus (5) mindestens eine Rückstellkupplung (5.1) umfasst, dazu ausgebildet, die Bewegungen der Sperrklingen beim Speichervorgang von dem Rückstellmechanismus zu entkoppeln und Verschiebungs- und Kraftaufwendungen des Rückstellaktors an die Sperrklingen weiterzuleiten, um die Sperrklingen von den Rastzähnen zu lösen.

11. Mikromechanische Vorrichtung gemäß einem der Ansprüche 1 - 10, weiterhin umfassend mindestens zwei Verbindungselemente (1) zur Erfassung der Dehnung an einem Prüfobjekt (12).

12. Mikromechanische Vorrichtung gemäß einem der Ansprüche 1 - 11, weiterhin umfassend einen mechanischen Eingangswandler (16) zur energieautarken Messung und Speicherung einer physikalischen Größe.

13. Verfahren zur mechanischen Speicherung einer Verschiebung mit Hilfe einer mikromechanischen Vorrichtung gemäß einem der Ansprüche 1 - 12, umfassend mindestens folgende Schritte:

    (i) Verstärkung eines geringen Verschiebungssignals über den mechanischen Verstärker (2) in ein größeres Verschiebungssignal;
    (ii) Fixierung der erreichten verstärkten Verschiebung über Sperrklingen (4.2) und Rastzähne (4.3) am Maximalwertspeicher (4);
    (iii) Wandlung der fixierten Läuferposition in ein elektrisches Signal über einen elektromechanischen Signalwandler (3), wobei es sich bei dem elektromechanischen Signalwandler vorzugsweise um einen kapazitiven Wandler (3.3) handelt.

14. Verfahren zur mechanischen Speicherung einer Verschiebung gemäß Anspruch 13, umfassend folgenden weiteren Schritt zwischen besagten Schritten (i) und (ii):
    Einkopplung einer Verschiebung an Maximalwertspeicher über eine mechanische Kupplung (6).

15. Verfahren zur mechanischen Speicherung einer Verschiebung gemäß einem der Ansprüche 13 - 14, umfassend folgenden weiteren Schritt als letzten Schritt:
    Löschen des mechanischen Maximalwertspeichers über einen Rücksetzmechanismus (5) durch Lösen der Sperrklingen (4.2) von den Rastzähnen (4.3).

Fig. 1

Fig. 2

Fig. 3

Fig. 4

Fig. 5

Fig. 6

Fig. 7A

Fig. 7B

10

1a

17.1

17.2

17

1b

1c

1d

2.1

3.1.5

2

2.2

3.1.1

$U_{Bit,1}$

R

3.1.2

$U_{Bit,0}$

R

7

3.1

8

$U_0$

y

x

3.1.6

Fig. 8

Fig. 9

$y_{out} = A_{total} \cdot y_{in}$

Fig. 10

Fig. 11

Fig. 12

Fig. 13

Fig. 14

Fig. 15

Fig. 16a

Fig. 16b

Fig. 17

| $y$ | $U_s$ | $U_{Bit,2}$ | $U_{Bit,1}$ | $U_{Bit,0}$ |
|---|---|---|---|---|
| -7 | $U_0$ | $U_0$ | 0 | 0 |
| -6 | $U_0$ | $U_0$ | 0 | $U_0$ |
| -5 | $U_0$ | $U_0$ | 0 | $U_0$ |
| -4 | $U_0$ | $U_0$ | $U_0$ | 0 |
| -3 | $U_0$ | 0 | $U_0$ | 0 |
| -2 | $U_0$ | 0 | $U_0$ | $U_0$ |
| -1 | $U_0$ | 0 | $U_0$ | $U_0$ |
| 0 | 0 | 0 | 0 | 0 |

| $y$ | $U_s$ | $U_{Bit,2}$ | $U_{Bit,1}$ | $U_{Bit,0}$ |
|---|---|---|---|---|
| 0 | 0 | 0 | 0 | 0 |
| 1 | $U_0$ | 0 | $U_0$ | $U_0$ |
| 2 | $U_0$ | 0 | $U_0$ | $U_0$ |
| 3 | $U_0$ | 0 | $U_0$ | 0 |
| 4 | $U_0$ | $U_0$ | $U_0$ | 0 |
| 5 | $U_0$ | $U_0$ | 0 | $U_0$ |
| 6 | $U_0$ | $U_0$ | 0 | $U_0$ |
| 7 | $U_0$ | $U_0$ | 0 | 0 |

Fig. 18

Fig. 19

Fig. 20

Fig. 21

Fig. 22

Fig. 23

Fig. 24

A

$$y_S = a_{RZ} + 0 \cdot \frac{a_{RZ}}{2}$$

B

$$y_S = a_{RZ} + 1 \cdot \frac{a_{RZ}}{2}$$

C

$$y_S = a_{RZ} + 2 \cdot \frac{a_{RZ}}{2}$$

D

$$y_S = a_{RZ} + 3 \cdot \frac{a_{RZ}}{2}$$

4

8    4.1.3

4.2.3

4.1.1

4.2.1

Fig. 25

Fig. 26

Fig. 27

Fig. 28

Fig. 29

Fig. 30

Fig. 31

15.1
A
15.2
15.3

B
15.4

E
15.7

C

F
15.6

D

G

H

I

15.5

Fig. 32

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10214984 B4
- EP 2294374 B1
- DE 102014004544 T5
- DE 102010038062 B9
- DE 102015002452 T5
- DE 69822097 T2
- DE 102016202769 A1
- EP 2705330 B1

**In der Beschreibung aufgeführte Nicht-Patentliteratur**

- **CHEN, C. et al.** Femtosecond Laser-Inscribed High-Order Bragg Gratings in Large-Diameter Sapphire Fibers for High-Temperature and Strain Sensing. *Journal of Lightwave Technology,* 2018
- **GERLACH, G ; W. DÖTZEL.** Einführung in die Mikrosystemtechnik ein Kursbuch für Studierende. Carl Hanser Verl, 2006, 384
- **SCHOMBURG, W.K.** Introduction to Microsystem Design. Springer, 2011
- **TIAN, Q. H. ; YAN, L. P. ; YANG, T ; CHEN, B. Y.** Recent Developments of Material Deformation Measurement. In Applied Mechanics and Materials. *Trans Tech Publications,* 2012, vol. 117, 122-128
- **TIETZE, U. ; C. SCHENK ; E. GAMM.** Halbleiter-Schaltungstechnik. Springer-Verlag, 2012